(19)

Europäisches
Patentamt
European
Patent Office
Office européen
des brevets

(11) **EP 4 439 435 A1**

(12) **EUROPEAN PATENT APPLICATION**

(43) Date of publication:
**02.10.2024 Bulletin 2024/40**

(21) Application number: **24158223.8**

(22) Date of filing: **16.02.2024**

(51) International Patent Classification (IPC):
***G06Q 30/0207*** *(2023.01)*

(52) Cooperative Patent Classification (CPC):
**G06Q 30/0207**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.03.2023 JP 2023053360**

(71) Applicant: **TOYOTA JIDOSHA KABUSHIKI
KAISHA
Toyota-shi, Aichi-ken, 471-8571 (JP)**

(72) Inventors:
• **NITTA, Iwao**
 **Aichi-ken, 471-8571 (JP)**
• **FUJIWARA, Teruyoshi**
 **Aichi-ken, 471-8571 (JP)**
• **SUZUKI, Ryota**
 **Aichi-ken, 451-6015 (JP)**

(74) Representative: **Cabinet Beau de Loménie
158, rue de l'Université
75340 Paris Cedex 07 (FR)**

(54) **INFORMATION PROCESSING DEVICE, INFORMATION PROCESSING METHOD, AND TERMINAL**

(57)     A control unit (11) of an information processing device (1) configured to acquire pieces of product information on a plurality of incorporated products incorporated in a target product, calculate a contribution rate of each of the incorporated products to satisfaction of a predetermined condition about a predetermined traceability item of the target product based on information on the predetermined traceability item in the product information, determine an amount of an incentive for each of the incorporated products based on the contribution rate of each of the incorporated products, and notify an account of a supplier of each of the incorporated products about information on the amount of the incentive.

FIG. 13

START

S201
CALCULATE AMOUNT OF REDUCTION IN IN-HOUSE CFP FOR EACH INCORPORATED PRODUCT

S202
CALCULATE CONTRIBUTION RATE OF EACH INCORPORATED PRODUCT BASED ON AMOUNT OF REDUCTION IN IN-HOUSE CFP

S203
DETERMINE AMOUNT OF INCENTIVE FOR EACH INCORPORATED PRODUCT

S204
TRANSMIT INFORMATION ON AMOUNT OF INCENTIVE

END

EP 4 439 435 A1

**Description**

1. Field of the Invention

The present disclosure relates to an information processing device, an information processing method, and a terminal.

2. Description of Related Art

Japanese Unexamined Patent Application Publication No. 2004-171146 (JP 2004-171146 A) discloses a system for managing data between a plurality of companies constituting a supply chain. In the system disclosed in JP 2004-171146 A, a management server connected to each company via a communication line includes a transaction product database. The transaction product database stores product information associated with a product for which a contract has been concluded between a vendor company and a customer company.

SUMMARY OF THE INVENTION

The present disclosure provides a technology that can prompt suppliers of a plurality of incorporated products included in a target product for which a predetermined condition is set about a predetermined traceability item to contribute to satisfying the predetermined condition.

An information processing device according to a first aspect of the present disclosure includes a control unit. The control unit is configured to execute: acquiring pieces of product information on a plurality of incorporated products incorporated in a target product, the product information including information on a predetermined traceability item for each of the incorporated products; calculating a contribution rate of each of the incorporated products to satisfaction of a predetermined condition about the predetermined traceability item of the target product based on the information on the predetermined traceability item in the acquired product information; determining an amount of an incentive for each of the incorporated products based on the calculated contribution rate of each of the incorporated products; and notifying an account of a supplier of each of the incorporated products about information on the determined amount of the incentive.

In the information processing device, the calculating the contribution rate of each of the incorporated products may include calculating the contribution rate of each of the incorporated products to be higher as an amount of improvement in a value related to the predetermined traceability item in the product information on each of the incorporated products in a predetermined period increases.

In the information processing device, the calculating the contribution rate of each of the incorporated products may include calculating the contribution rate of each of the incorporated products to be higher as a degree of achievement of a value related to the predetermined traceability item in the product information on each of the incorporated products relative to a reference value set for each of the incorporated products increases.

In the information processing device, the product information on each of the incorporated products may include information indicating whether the information on the predetermined traceability item is inventory data or actual measurement data. The calculating the contribution rate of each of the incorporated products may include calculating the contribution rate of each of the incorporated products under the condition that the information on the predetermined traceability item in the product information on each of the incorporated products is updated from the inventory data to the actual measurement data.

In the information processing device, the predetermined condition may be that the predetermined traceability item of the target product achieves a predetermined target value. The calculating the contribution rate of each of the incorporated products may include calculating the contribution rate of each of the incorporated products to achievement of the predetermined target value of the predetermined traceability item of the target product.

In the information processing device, the predetermined traceability item may include a carbon footprint of products, a recycling rate related to a predetermined raw material, or a score related to due diligence.

In the information processing device, the predetermined traceability item may be a carbon footprint of products. The product information on each of the incorporated products may include an amount of carbon dioxide emission during production as information on the carbon footprint of products. The product information on each of the incorporated products may further include information indicating a reduction in the amount of carbon dioxide emission during production of each of the incorporated products by purchase of carbon credit. The calculating the contribution rate of each of the incorporated products may include calculating the contribution rate of each of the incorporated products to be higher as the reduction by the purchase of the carbon credit decreases when a value of the amount of carbon dioxide emission during production of each of the incorporated products in the product information on each of the incorporated products is the same.

In the information processing device, the control unit may be configured to further execute receiving selection of a plurality of suppliers from among the suppliers of the incorporated products incorporated in the target product. The acquiring the pieces of product information on the incorporated products, the calculating the contribution rate of each of the incorporated products, the determining the amount of the incentive for each of the incorporated products, and the notifying the account of the supplier about the information on the determined amount of the incentive may be executed for the incorporated products of the selected suppliers.

In the information processing device, the control unit may be configured to further execute receiving a request for the incentive from any of the suppliers of the incorporated products incorporated in the target product. The acquiring the pieces of product information on the incorporated products, the calculating the contribution rate of each of the incorporated products, the determining the amount of the incentive for each of the incorporated products, and the notifying the account of the supplier about the information on the determined amount of the incentive may be executed in response to reception of the request from any of the suppliers.

In the information processing device, the control unit may be configured to further execute: acquiring information on a product tree indicating relationships among the incorporated products incorporated in the target product; and identifying the incorporated products incorporated in the target product by referring to the information on the product tree. The acquiring the pieces of product information may include acquiring pieces of product information on the identified incorporated products.

In the information processing device, the target product may be a product related to a battery to be mounted on a battery electric vehicle.

An information processing method according to a second aspect of the present disclosure is executed by an information processing device. The information processing method includes: acquiring pieces of product information on a plurality of incorporated products incorporated in a target product, the product information including information on a predetermined traceability item for each of the incorporated products; calculating a contribution rate of each of the incorporated products to satisfaction of a predetermined condition about the predetermined traceability item of the target product based on the information on the predetermined traceability item in the acquired product information; determining an amount of an incentive for each of the incorporated products based on the calculated contribution rate of each of the incorporated products; and notifying an account of a supplier of each of the incorporated products about information on the determined amount of the incentive.

In the information processing method, the calculating the contribution rate of each of the incorporated products may include calculating the contribution rate of each of the incorporated products to be higher as an amount of improvement in a value related to the predetermined traceability item in the product information on each of the incorporated products in a predetermined period increases.

In the information processing method, the calculating the contribution rate of each of the incorporated products may include calculating the contribution rate of each of the incorporated products to be higher as a degree of achievement of a value related to the predetermined traceability item in the product information on each of the incorporated products relative to a reference value set for each of the incorporated products increases.

In the information processing method, the product information on each of the incorporated products may include information indicating whether the information on the predetermined traceability item is inventory data or actual measurement data. The calculating the contribution rate of each of the incorporated products may include calculating the contribution rate of each of the incorporated products when the information on the predetermined traceability item in the product information on each of the incorporated products is updated from the inventory data to the actual measurement data.

In the information processing method, the predetermined condition may be that the predetermined traceability item of the target product achieves a predetermined target value. The calculating the contribution rate of each of the incorporated products may include calculating the contribution rate of each of the incorporated products to achievement of the predetermined target value of the predetermined traceability item of the target product.

In the information processing method, the predetermined traceability item may be a carbon footprint of products. The product information on each of the incorporated products may include an amount of carbon dioxide emission during production as information on the carbon footprint of products. The product information on each of the incorporated products may further include information for determining whether an amount of reduction in the amount of carbon dioxide emission during production of each of the incorporated products is obtained by purchase of carbon credit. The calculating the contribution rate of each of the incorporated products may include calculating the contribution rate of each of the incorporated products to be higher as the amount of reduction by the purchase of the carbon credit decreases when a value of the amount of carbon dioxide emission during production of each of the incorporated products in the product information on each of the incorporated products is the same.

The information processing method may further include receiving selection of a plurality of suppliers from among the suppliers of the incorporated products incorporated in the target product. The acquiring the pieces of product information on the incorporated products, the calculating the contribution rate of each of the incorporated products, the determining the amount of the incentive for each of the incorporated products, and the notifying the account of the supplier about the information on the determined amount of the incentive may be executed for the incorporated products of the selected suppliers.

The information processing method may further include receiving a request for the incentive from any of the suppliers of the incorporated products incorporated in the target product. The acquiring the pieces of product information on the incorporated products, the calculating the contribution rate of each of the incorporated products, the determining the amount of the incentive for each of the incorporated products, and the notifying the account of the supplier about the information on the determined amount of the incentive may be executed in response to reception of the request from any of the suppliers.

A terminal according to a third aspect of the present disclosure is associated with a supplier of a first incorporated product among a plurality of incorporated products incorporated in a target product. The terminal includes a control unit. The control unit is configured to execute: providing product information on the first incorporated product to a server device, the product information including information on a predetermined traceability item for the first incorporated product; and receiving a notification about an amount of an incentive for the first incorporated product based on a contribution rate of the first incorporated product to satisfaction of a predetermined condition about the predetermined traceability item of the target product, the contribution rate being calculated in the server device based on the information on the predetermined traceability item in the product information.

According to the present disclosure, it is possible to prompt the suppliers of the incorporated products included in the target product for which the predetermined condition is set about the predetermined traceability item to contribute to satisfying the predetermined condition.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

FIG. 1 illustrates an example of a supply chain according to a first embodiment;
FIG. 2 illustrates an example of relationships among products supplied by the supply chain;
FIG. 3 shows an outline of a process to be performed between company terminals and a server device;
FIG. 4 is a hardware configuration diagram of the server device according to the first embodiment;
FIG. 5 is a hardware configuration diagram of the company terminal according to the first embodiment;
FIG. 6 is a software configuration diagram of the server device according to the first embodiment;
FIG. 7 is a software configuration diagram of the company terminal according to the first embodiment;
FIG. 8 shows an example of product information generated by a product information generating unit;
FIG. 9 shows an example of a flow of a process to be executed by the server device;
FIG. 10 illustrates a product tree of a plurality of products constituting a final product and in-house carbon footprints of products (CFPs) for the individual products;
FIG. 11 shows an example of a screen in which the product tree is output as an image;
FIG. 12 shows an advance notice process according to the first embodiment;
FIG. 13 shows a setting process according to the first embodiment;
FIG. 14 shows a process for giving an incentive according to a second embodiment;
FIG. 15 is a software configuration diagram of a server device according to a third embodiment; and
FIG. 16 shows a process for giving an incentive according to the third embodiment.

DETAILED DESCRIPTION OF EMBODIMENTS

In recent years, there may be a requirement to secure traceability of a carbon footprint of products (CFP), a recycling rate of a specific material, due diligence, etc. for a specific product such as a battery. For example, legislation that requires securing traceability of CFPs in batteries is about to be enacted in Europe.

An item for which the traceability as described above is required to be secured may hereinafter be referred to as "traceability item". It is assumed that conditions to be satisfied, such as a specified value and a target value, are set for the traceability item. In order that a target product satisfy a predetermined condition about a predetermined traceability item, a plurality of products such as components and materials to be incorporated in the target product is desirably obtained to contribute to satisfying the predetermined condition. The products such as components and materials incorporated in the target product may hereinafter be referred to as "incorporated products". That is, the supplier of each incorporated product is required to carry out processes of production, manufacture, transportation, etc. of the incorporated product so that the target product can satisfy the predetermined condition about the predetermined traceability item.

However, the contribution to satisfying the predetermined condition about the predetermined traceability item of the target product that is a final product may be a burden on the supplier of each incorporated product. If the structure of a supply chain related to the target product is complicated, it is difficult to grasp the degree of contribution of each supplier. Therefore, it is important to increase the motivation of each supplier to contribute to satisfying the predetermined condition about the predetermined traceability item of the target product. The present disclosure provides a technology for solving such problems.

An information processing device according to a first aspect of the present disclosure includes a control unit. The control unit acquires pieces of product information on a plurality of incorporated products incorporated in a target product. The target product is a product for which a predetermined condition is set about a predetermined traceability item. The product information includes information on the predetermined traceability item for each incorporated product. Such product information can be provided from a supplier of each incorporated product.

The control unit calculates a contribution rate of each incorporated product to satisfaction of the predetermined condition about the predetermined traceability item of the target product. At this time, the control unit calculates the contribution rate of each incorporated product based on the information on the predetermined traceability item in the product information on each incorporated product. For example, the control unit may calculate the contribution rate of the incorporated product based on an amount of improvement in the predetermined traceability item in the product information on the incorporated product in a predetermined period. The control unit may calculate the contribution rate of the incorporated product based on a degree of achievement of a value of the predetermined traceability item in the product information on the incorporated product relative to a reference value set for the incorporated product. The control unit may calculate the contribution rate of the incorporated product when the information on the predetermined traceability item in the product information on the incorporated product is replaced with actual measurement data from inventory data.

The control unit determines an amount of an incentive for each incorporated product based on the calculated contribution rate of each incorporated product. That is, the amount of the incentive to be given to each supplier is determined based on the contribution rate of each incorporated product. At this time, the amount of the incentive for one incorporated product may be increased as the contribution rate of the one incorporated product increases. When the total amount of incentives to be given to a plurality of suppliers is predetermined, the ratio of the incentive for one incorporated product may be increased as the contribution rate of the one incorporated product increases. The control unit notifies an account of the supplier of each incorporated product about information on the determined amount of the incentive.

According to the present disclosure, the incentive is given to the supplier of each incorporated product based on the contribution rate of each incorporated product to the satisfaction of the predetermined condition about the predetermined traceability item of the target product. Therefore, the suppliers of the incorporated products can be prompted to contribute to satisfying the predetermined condition. Even if the structure of the supply chain related to the target product is complicated, appropriate amounts of incentives can be given to the suppliers.

Specific embodiments of the present disclosure will be described below with reference to the drawings. The dimensions, materials, shapes, relative arrangements, etc. of components described in the embodiment are not intended to limit the technical scope of the present disclosure to those dimensions, materials, shapes, relative arrangements, etc. unless otherwise specified.

First Embodiment

A system according to the present embodiment provides information on products supplied by a supply chain including a plurality of companies. The information on products is typically information on traceability.

First, the structure of the supply chain will be described. In one example, at least some companies (intermediate suppliers) in the supply chain may receive components from one or more upstream companies, produce in-house products by using the received components, and deliver the produced in-house products to companies in the next step (downstream companies). Most upstream companies may directly produce in-house products and deliver the produced in-house products to companies in the next step. Some companies in the supply chain may directly deliver, to different companies, products received from other companies (i.e., participate in distribution). A plurality of companies repeats this process, and a final product is obtained in the final step.

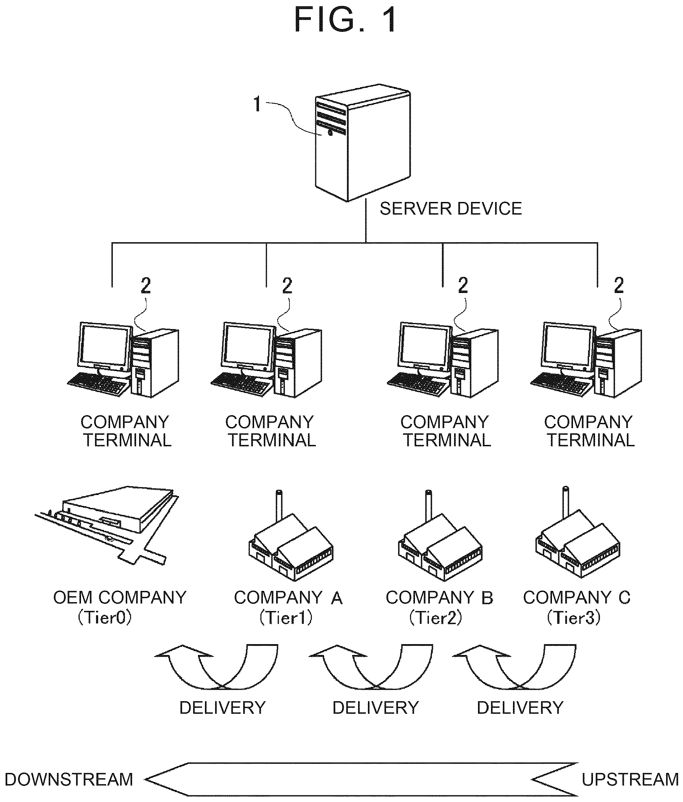

FIG. 1 illustrates an example of the supply chain according to the present embodiment. In the example of FIG. 1, it is assumed that a product related to an automobile is obtained. Specifically, the supply chain shown in FIG. 1 includes an original equipment manufacturing (OEM) company and a plurality of supplier companies. The OEM company is a company that assembles a final product, and the supplier companies (companies A to C) are companies that supplies components, materials, assemblies, etc. for manufacturing the final product. The supplier companies each produce a plurality of products and deliver the products to a company positioned one level lower. The companies repeat this process, and a final product is assembled in the final step.

In certain hierarchical levels in the present embodiment, the side that delivers a product will be referred to as "upstream side", and the side that purchases the product and produces a new product will be referred to as "downstream side". A company positioned on the upstream side will herein be referred to as "upstream company", and a company positioned on the downstream side will herein be referred to as "downstream company". A product produced by the upstream company will be referred to as "upstream product", and a product produced by the downstream company will be referred to as "downstream product". The downstream product incorporates the upstream product as a component or material.

In the present embodiment, the hierarchical levels in the supply chain will be referred to as "tiers". Tier 0 is the lowest level at which the final product is assembled. That is, Tier 0 corresponds to the OEM company. Transition is made to the upstream level in the order of Tiers 1, 2, and 3. Depending on the level of interest, the same company can be regarded as a downstream company or as an upstream company. For example, the company B positioned in Tier 2 is a downstream company in relation to Tier 3, but is an upstream company in relation to Tier 1. Thus, the definitions of the upstream company and the downstream company may vary from level to level.

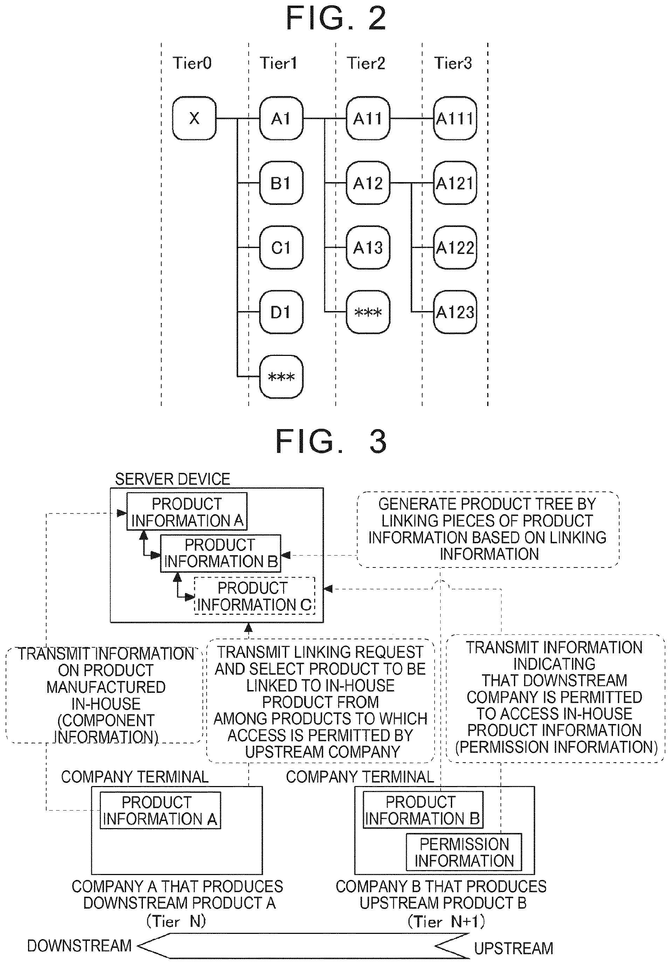

FIG. 2 illustrates an example of relationships among products supplied by the supply chain. Supply relationships among a plurality of products constituting a final product X are represented by a tree diagram. In this example, the final product X is produced by assembling products AI, B1, C1, D1, etc. The product A1 is produced by assembling products A11, A12, A13, etc. In this way, the relationships among the products constituting the final product can be represented by a tree diagram in which the individual products serve as nodes. A tree diagram for a specific final product will hereinafter be referred to as "product tree". In one example, the final product X is a battery to be mounted on a battery electric vehicle (BEV). In another example, the final product X may be an automobile or an automobile-related product such as an automotive assembly.

A server device 1 according to the present embodiment collects pieces of information on products produced by the companies (hereinafter referred to as "product information") and information for linking the pieces of product information from terminals associated with the companies (company terminals 2), and generates the product tree based on these pieces of information. The product information includes information on a predetermined traceability item such as a carbon footprint of products (CFP) (hereinafter referred to as "traceability-related information"). By tracing the product tree in which the pieces of product information are linked, the predetermined traceability item can be traced. The traceability-related information may include any information that can be a target for securing traceability.

As shown in FIG. 1, an information processing system according to an example of the present embodiment includes the server device 1 and a plurality of company terminals 2. The company terminals 2 are associated with the companies constituting the supply chain. The server device 1 collects pieces of information for generating a product tree from the company terminals 2, and generates the product tree based on these pieces of information. The server device 1 can execute a traceability-related process (typically a process for calculating the CFP) based on the generated product tree. The result of execution of the process can be transmitted to the company terminals 2.

Next, an outline of a process for generating the product tree by the server device 1 will be described with reference to FIG. 3. FIG. 3 shows an outline of a process to be performed between the company terminals 2 and the server device 1. In the example of FIG. 3, it is assumed that a downstream company A and an upstream company B are present at any hierarchical levels. It is assumed that the company B produces a product B and delivers it to the company A, and the company A produces a product A by using the product B. That is, in the example of FIG. 3, the product B is a child node of the product A on the product tree.

To generate the product tree, the company terminal 2 associated with each company transmits information on a product produced by the company to the server device 1. In this example, the company terminal 2 associated with the company A transmits product information on the product A (referred to as "product information A") to the server device 1. Similarly, the company terminal 2 associated with the company B transmits product information on the product B (referred to as "product information B") to the server device 1. The product information of each company is stored in the server device 1.

An operation for linking the pieces of product information stored in the server device 1 is performed by the company terminal 2. In one example, a representative person of a downstream company logs into the server device 1 from the company terminal 2 by using an account of the downstream company, and selects an upstream product to be linked with a downstream product that is the in-house product. In this way, the pieces of product information are linked from the downstream product to the upstream product. The server device 1 links the pieces of product information with each other based on the selection.

If all the products in the supply chain and all the pieces of information on the products are presented as options for the selection of the product to be linked, however, the confidentiality will be lost for information on the companies constituting the supply chain and information on the products produced by the companies. Further, it may be inappropriate to disclose the entire product tree to one supplier.

Therefore, the server device 1 according to the present embodiment invests authority to access the product information on the upstream product in the downstream company in advance in response to a request from the upstream company. The server device 1 permits reference from the downstream company within a range of the invested authority.

In the example of FIG. 3, the company terminal 2 associated with the upstream company B transmits, to the server device 1, an instruction request (information) to "invest the company A with authority to access the product information B". When a linking request is received from the company terminal 2 associated with the company A, the server device 1 provides only a list of product information that the company A is authorized to access, and prompts the company A to make selection for product information to be linked. When the company terminal 2 associated with the company A requests reference to the product tree, the server device 1 provides the company terminal 2 with the product tree in which information other than the information that the company A is authorized to access is concealed. Thus, the information on irrelevant companies and products can be concealed.

The product tree generated by the method described above is also used for a process for giving an incentive to each company (supplier) belonging to the supply chain. For the final product manufactured by the OEM company, a predetermined condition to be satisfied is set about a predetermined traceability item. For example, it may legally be required that the value of the predetermined traceability item of the final product satisfy a predetermined specified value. In such a case, the predetermined condition is set about the predetermined traceability item to satisfy the predetermined specified value.

In order to satisfy the predetermined condition about the predetermined traceability item of the final product, a plurality of incorporated products such as components and materials to be incorporated in the final product is desirably obtained to contribute to satisfying the predetermined condition. Therefore, the server device 1 calculates a contribution rate of each incorporated product in the product tree for the final product X based on the traceability-related information on each incorporated product. The contribution rate of each incorporated product is a rate of contribution of each incorporated product to the satisfaction of the predetermined condition in the final product X.

The server device 1 sets an incentive for each incorporated product based on the calculated contribution rate of each incorporated product. The incentive set in this way is given to the supplier of each incorporated product. At this time, the incentive may be given as a reward to each supplier. The incentive may be included in the terms and conditions of transaction of a product between suppliers in the supply chain. Details of the method for setting the incentive for each incorporated product will be described later.

Hardware Configurations

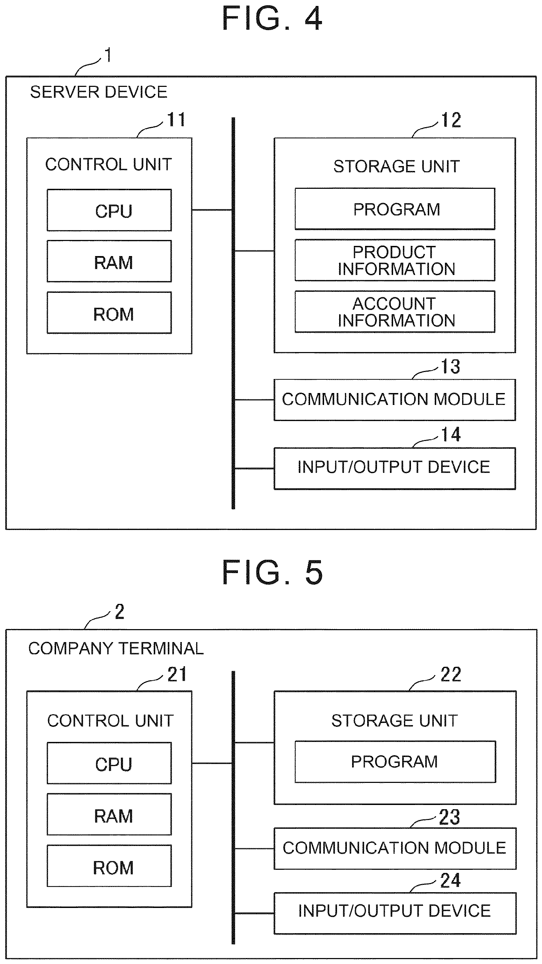

Next, the hardware configuration of the device constituting the system will be described with reference to FIG. 4. FIG. 4 schematically shows an example of the hardware configuration of the server device 1 according to the present embodiment. The server device 1 is a computer including a control unit 11, a storage unit 12, a communication module 13, and an input/output device 14.

The server device 1 may be a computer including a processor (e.g., a central processing unit (CPU) or a graphics processing unit (GPU)), a main storage device (e.g., a random access memory (RAM) or a read only memory (ROM)), and an auxiliary storage device (e.g., an erasable programmable read only memory (EPROM), a hard disk drive, or a removable medium). An operating system (OS), various programs, various tables, etc. are stored in the auxiliary storage device. The programs stored in the auxiliary storage device are executed such that various functions (software modules) can be implemented to meet a predetermined purpose as described later. Some or all of the modules may be implemented as hardware modules by a hardware circuit such as an application specific integrated circuit (ASIC) or a field programmable gate array (FPGA).

The control unit 11 is an arithmetic unit that implements various functions of the server device 1 by executing a predetermined program. The control unit 11 can be implemented by, for example, a hardware processor such as a CPU. The control unit 11 may include a RAM, a ROM, a cache memory, etc.

The storage unit 12 is means for storing information, and is constituted by a storage medium such as a RAM, a magnetic disk, or a flash memory. The storage unit 12 stores programs to be executed by the control unit 11, data to be used by the programs, etc. A database is constructed in the storage unit 12 and stores pieces of product information collected from the company terminals 2 and pieces of account information related to the companies. Details will be described later.

The communication module 13 is a communication interface for connecting the server device 1 to a network. The communication module 13 may include, for example, a network interface board and a wireless communication interface for wireless communication. The server device 1 can perform data communication with other computers (e.g., another server device 1 or the company terminals 2) via the communication module 13.

The input/output device 14 is means for receiving an input operation performed by an operator and presenting information to the operator. Specifically, the input/output device 14 includes input devices such as a mouse and a keyboard, and output devices such as a display and a speaker. The input/output device may be, for example, a touch panel display in which the input devices and the output devices are integrated together.

In the specific hardware configuration of the server device 1, any component may be omitted, replaced, or added as appropriate depending on embodiments. For example, the control unit 11 may include a plurality of hardware processors. The hardware processor may be a microprocessor, an FPGA, a GPU, etc. The input/output device 14 may be omitted, or an input/output device other than the illustrated one (e.g., an optical drive) may be added. The server device 1 may be constituted by a plurality of computers. In this case, the hardware configurations of the computers may or may not agree with each other.

FIG. 5 schematically shows an example of the hardware configuration of the company terminal 2 according to the present embodiment. The company terminal 2 is a computer including a control unit 21, a storage unit 22, a communication module 23, and an input/output device 24.

Similarly to the server device 1, the company terminal 2 may be a computer including a processor (e.g., a CPU or a GPU), a main storage device (e.g., a RAM or a ROM), and an auxiliary storage device (e.g., an EPROM, a hard disk drive, or a removable medium). Some or all of the functions (software modules) may be implemented as hardware modules by a hardware circuit such as an ASIC or an FPGA.

The control unit 21 is an arithmetic unit that implements various functions (software modules) of the company terminal 2 by executing a predetermined program. The control unit 21 can be implemented by, for example, a hardware processor such as a CPU. The control unit 21 may include a RAM, a ROM, a cache memory, etc.

The storage unit 22 is means for storing information, and is constituted by a storage medium such as a RAM, a magnetic disk, or a flash memory. The storage unit 22 stores programs to be executed by the control unit 21, data to be used by the programs, etc.

The communication module 23 is a communication interface for connecting the company terminal 2 to a network. The communication module 23 may include, for example, a network interface board and a wireless communication interface for wireless communication. The company terminal 2 can perform data communication with other computers (e.g., the server device 1) via the communication module 23.

The input/output device 24 is means for receiving an input operation performed by an operator and presenting information to the operator. Specifically, the input/output device 24 includes input devices such as a mouse and a keyboard, and output devices such as a display and a speaker. The input/output device may be, for example, a touch panel display in which the input devices and the output devices are integrated together.

In the specific hardware configuration of the company terminal 2, any component may be omitted, replaced, or added as appropriate depending on embodiments similarly to the server device 1.

Software Configurations

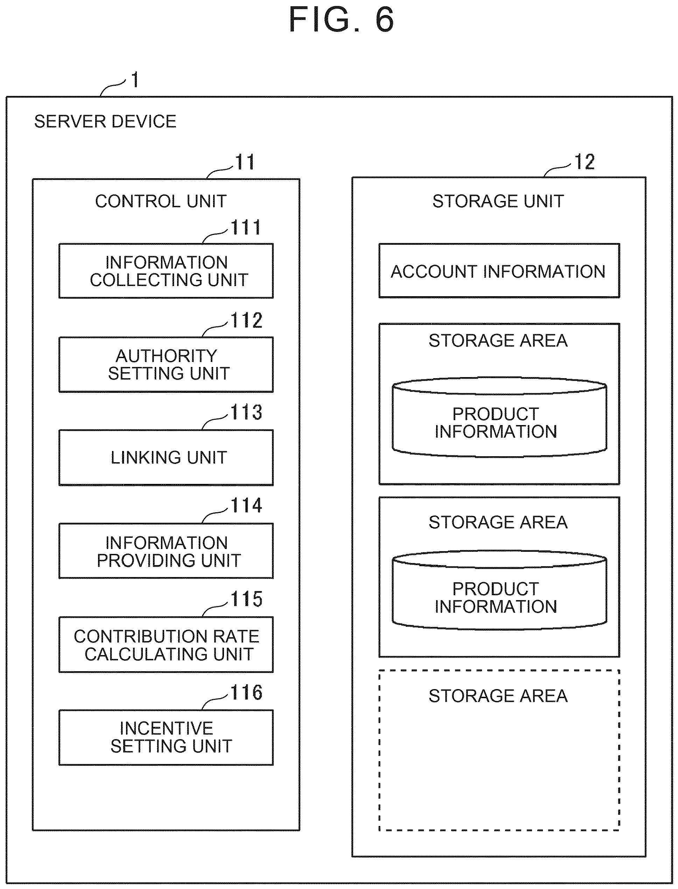

Next, the software configuration of the device constituting the system will be described with reference to FIG. 6. FIG. 6 schematically shows an example of the software configuration of the server device 1 according to the present embodiment. In the present embodiment, the control unit 11 includes six software modules that are an information collecting unit 111, an authority setting unit 112, a linking unit 113, an information providing unit 114, a contribution rate calculating unit 115, and an incentive setting unit 116. The software modules may be implemented by the control unit 11 (CPU) executing programs stored in the storage unit 12. Information processing to be executed by the information collecting unit 111, the authority setting unit 112, the linking unit 113, the information providing unit 114, the contribution rate calculating unit 115, and the incentive setting unit 116 is synonymous with information processing to be executed by the control unit 11.

The information collecting unit 111 executes a process for receiving product information transmitted from the company terminal 2 and storing the product information in the storage unit 12. The authority setting unit 112 receives information for setting authority to access the product information (hereinafter referred to as "permission information") from the company terminal 2. The authority setting unit 112 executes a process for setting authority to access the product information stored in the storage unit 12 based on the received information.

The linking unit 113 acquires information for linking pieces of product information from the company terminal 2 by interacting with the company terminal 2. The linking unit 113 executes a process for writing information indicating a linking relationship for the pieces of product information stored in the storage unit 12 based on the acquired information. The linking unit 113 executes a process for receiving a request to assign termination information and, in response to the request, assigning the termination information to the product information stored in the storage unit 12. A product tree is formed by reflecting the linking and termination. That is, the product tree is formed by saving the linking information and the termination information in the storage unit 12. The linking unit 113 generates the product tree based on results of the linking and termination.

The information providing unit 114 executes information processing related to the product tree and outputs a result of executing the information processing. The information processing related to the product tree may include a process for performing calculation on a predetermined traceability item in the product tree. The output of the result of executing the information processing may include a process for providing information on the generated product tree to the company terminal 2. In one example, the information providing unit 114 generates information on the product tree and outputs the generated information on the product tree.

In the present embodiment, the storage unit 12 includes a plurality of logical storage areas. Different access authorities can be set in the storage areas, such as an area that the company A is authorized to access, an area that the company B is authorized to access, and an area that both the companies A and B are authorized to access. The authority setting unit 112 sets the access authority by storing the product information received from the company terminal 2 in an appropriate storage area. A specific processing method will be described later.

The storage unit 12 stores account information. In the present embodiment, an operator of each company logs into the server device 1 via the company terminal 2 by using an account of the corresponding company to perform interaction between the server device 1 and the company terminal 2. The account information is information on an account associated with each company constituting the supply chain. The login using an account is an example of access to the server device 1 as a corresponding company. The method for accessing the server device 1 is not limited to such an example, and may be selected as appropriate depending on embodiments.

The information on the product tree for the final product X generated by the information providing unit 114 is stored in the storage unit 12. When executing a process for giving incentives to the suppliers of the incorporated products included in the final product X, the control unit 11 identifies a plurality of incorporated products by referring to the information on the product tree stored in the storage unit 12. In the control unit 11, the contribution rate calculating unit 115 calculates contribution rates of the incorporated products to the satisfaction of the predetermined condition about the predetermined traceability item of the final product X.

In the control unit 11, the incentive setting unit 116 determines the amounts of incentives for the incorporated products based on the contribution rates of the incorporated products, and notifies accounts of the suppliers of the incorporated products about information on the determined amounts of incentives.

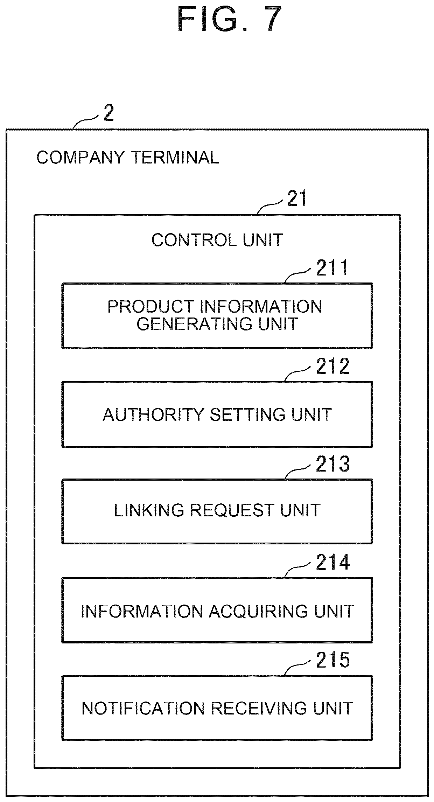

FIG. 7 schematically shows the software configuration of the company terminal 2 according to the present embodiment. In the present embodiment, the control unit 21 includes five software modules that are a product information generating unit 211, an authority setting unit 212, a linking request unit 213, an information acquiring unit 214, and a notification receiving unit 215. The software modules may be implemented by the control unit 21 (CPU) executing programs stored in the storage unit 22. Information processing to be executed by the product information generating unit 211, the authority setting unit 212, the linking request unit 213, the information acquiring unit 214, and the notification receiving unit 215 is synonymous with information processing to be executed by the control unit 21.

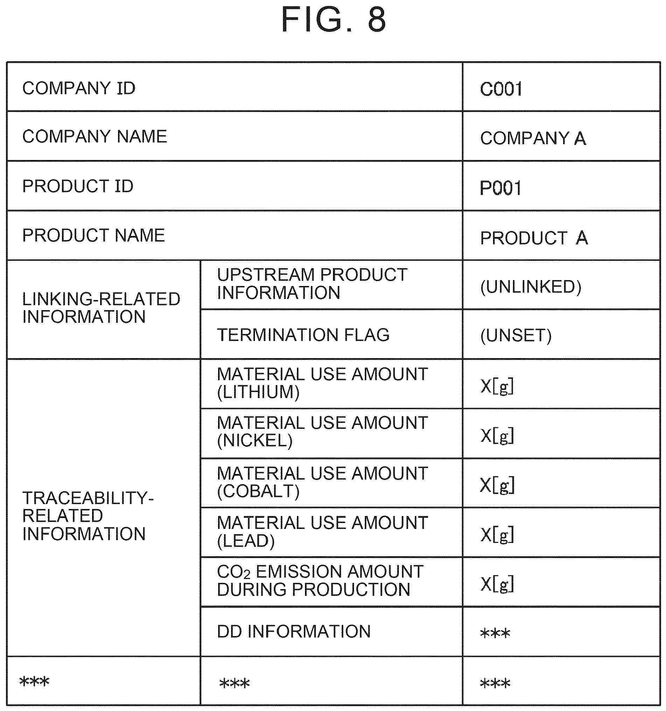

The product information generating unit 211 generates information (product information) on a product (incorporated product) of a company associated with the company terminal 2. FIG. 8 shows an example of the product information generated by the product information generating unit 211. The product information may be input via a device operator. In the present embodiment, the product information includes fields for a company identifier (ID), a company name, a product ID, and a product name. The company ID and the company name are an identifier and a name of a company that produces a target incorporated product (i.e., the company that uses the company terminal 2). The product ID and the product name are an identifier and a name of the target incorporated product.

The product information further includes linking-related information. The linking-related information is information for identifying an upstream product linked to the target incorporated product. In the present embodiment, the linking-related information includes fields for "upstream product information" and "termination flag".

The upstream product information field stores information for identifying product information associated with the upstream product linked to the target incorporated product (i.e., a product necessary for producing the target incorporated product). The upstream product information field is used when the server device 1 links products. When the product information is generated, the target incorporated product is not basically linked to the upstream product. Therefore, the upstream product information field need not store a value indicating the upstream product.

The termination flag field stores a flag indicating whether the target incorporated product is a leaf node in the product tree, that is, a node positioned on the most upstream (terminal end) side. In the present embodiment, the plurality of company terminals 2 transmits pieces of product information. Therefore, this flag is used to determine whether an upstream product is linked to a certain product in the product tree or no more products are linked to the certain product (whether the target incorporated product is positioned on the most upstream side). That is, the termination flag field is used when the server device 1 finalizes the linking between products. When the product information is generated, the linking relationship of the target incorporated product is basically not finalized. Therefore, the termination flag field may store "0" indicating that the target incorporated product is not currently on the most upstream side. To finally generate the product tree, the status of the product information of each company stored in the server device 1 is set to "linked to upstream product" or "termination flag is set to "1" indicating that target incorporated product is on most upstream side".

The product information further includes traceability-related information. In one example, the traceability-related information may include amounts of materials (e.g., upstream products) used per production volume of the product, information on a recycling rate of a predetermined raw material, a value obtained by converting an amount of greenhouse gases emitted when producing the product in-house into an amount of carbon dioxide emission ($CO_2$ emission amount during production: hereinafter referred to as "in-house CFP"), due diligence-related information (DD information), or a combination thereof. Examples of the predetermined raw material include lithium, nickel, cobalt, lead, and graphite. The recycling rate may be expressed directly or may be expressed indirectly, for example, by a combination of the total use amount and the amount of use of the recycled material. These values are associated with the process of producing the target incorporated product. In the example of FIG. 3, the traceability-related information in the product information A stores a value obtained by converting an amount of greenhouse gases emitted in-house in the production activities of the product A into an amount of carbon dioxide emission (i.e., an in-house CFP for the product A). The traceability-related information in the product information A does not include information on the processes up to the production of the upstream product (e.g., an amount of greenhouse gases emitted until the upstream product B is produced).

The traceability-related information may be selected as appropriate depending on embodiments. In one example, the CFP may include emissions in scope 1, scope 2, and scope 3. Scope 1 may cover an amount of direct greenhouse gas emissions. Scope 2 may cover an amount of indirect emissions along with the use of electricity, heat, and steam supplied by other companies. Scope 3 may cover an amount of indirect emissions other than those in scope 1 and scope 2. In one example, the due diligence-related information may be technical documentation on a product containing a target raw material (e.g., cobalt, natural graphite, lithium, or nickel), indicating that responsible mineral sourcing obligations are met for the amount of the raw material contained in the product, a smelter, etc. In another example, the due diligence-related information may include a score indicating the degree to which the obligations are met.

The product information generating unit 211 acquires such information via the operator of the company terminal 2 and transmits it to the server device 1 at any timing.

The authority setting unit 212 designates a downstream company that is permitted to access the product information transmitted from the company terminal 2 to the server device 1. The authority setting unit 212 receives designation of a downstream company that is permitted to access any in-house product.

The linking request unit 213 requests the server device 1 to link the in-house product information transmitted to the server device 1 to an upstream product. In one example, the linking request unit 213 first transmits a company ID and a product ID of the company of interest to the server device 1, and requests linking of product information associated with the product ID. The server device 1 generates a user interface including a list of product information (i.e., linking destination candidates) that the target company is permitted to access, and provides the generated user interface to the company terminal 2.

Subsequently, the linking request unit 213 prompts the operator to select an upstream product to be linked from the list. The linking request unit 213 transmits, to the server device 1, a pair of an identifier of a linking source product (downstream product) and an identifier of the linking destination upstream product. In response to this, the server device 1 can link the pieces of product information. When there is no upstream product to be linked to the target incorporated product, pieces of product information are not linked.

The information acquiring unit 214 requests the server device 1 to provide the product tree and outputs the information transmitted from the server device 1.

As described later, the notification receiving unit 215 receives an advance notice about incentive setting transmitted from the server device 1, and outputs the received advance notice. The notification receiving unit 215 receives information on an amount of the incentive for the incorporated product of the company associated with the company terminal 2 from the server device 1, and outputs the received information.

Details of Process Related to Product Tree Formation

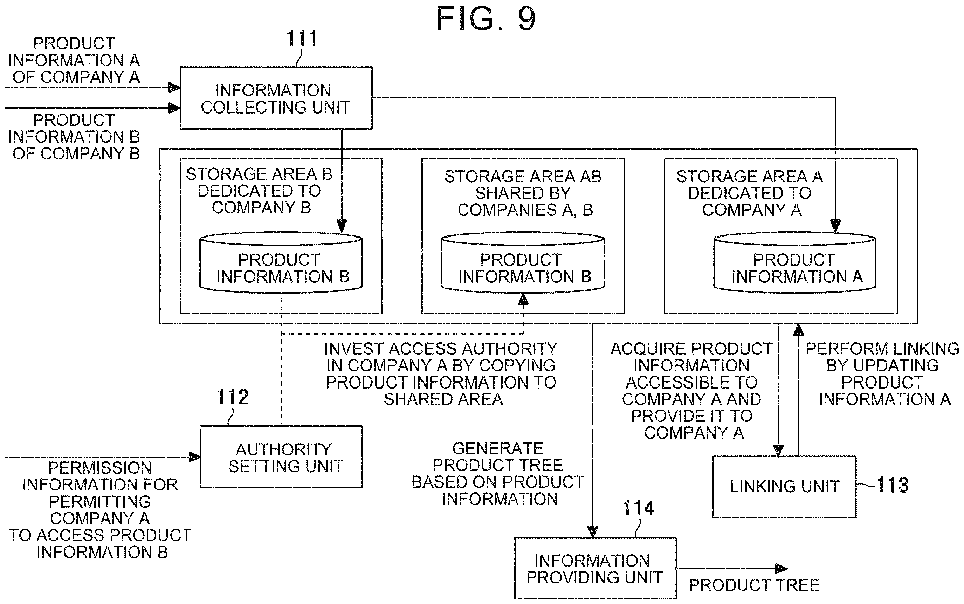

Next, details of a process to be performed by the server device 1 and the company terminal 2 will be described. FIG. 9 shows an example of a flow of a process to be executed by the server device 1 based on a request from the company terminal 2. The process to be performed by the server device 1 can roughly be divided into the following four phases.

    (1) First phase for receiving product information transmitted from the company terminal 2 and storing the received product information
    (2) Second phase for receiving permission information transmitted from the company terminal 2 and setting authority to access the product information based on the received permission information
    (3) Third phase for linking pieces of product information by interacting with the company terminal 2
    (4) Fourth phase for providing information on a product tree based on a linking result

In the example of FIG. 9, a company A is a downstream company and a company B is an upstream company. A product produced by the company A will be referred to as "product A", and a product produced by the company B will be referred to as "product B". Product information associated with the product A will be referred to as "product information A", and product information associated with the product B will be referred to as "product information B".

In the first phase, the information collecting unit 111 of the server device 1 acquires product information from the product information generating unit 211 of the company terminal 2. In the example of FIG. 9, the server device 1 acquires the product information A from the company terminal 2 associated with the company A, and acquires the product information B from the company terminal 2 associated with the company B. The information collecting unit 111 saves the product information A in a storage area that only the company A is authorized to access (hereinafter referred to as "storage area A"). The information collecting unit 111 saves the product information B in a storage area that only the company B is authorized to access (hereinafter referred to as "storage area B"). In this way, the information collecting unit 111 saves the product information transmitted from any company in a dedicated storage area that only the company is authorized to access.

In the second phase, the authority setting unit 112 of the server device 1 receives permission information from the authority setting unit 212 of the company terminal 2, and sets authority to access the product information based on the received permission information. The permission information is information in which a product is associated with a company permitted to access product information on the product.

In the example of FIG. 9, it is assumed that the authority setting unit 112 receives permission information indicating that the downstream company A is permitted to access the product information B of the upstream company. In this case, the authority setting unit 112 copies the product information B stored in the storage area B to a storage area that both the companies A and B are authorized to access (hereinafter referred to as "storage area AB"). Thus, the product information B is accessible to both the companies A and B. When no access authority is set for a specific item in the product information, the item is excluded from the target of copy to the storage area AB.

In the following description, a storage area that only a specific company is authorized to access will be referred to as "dedicated storage area", and a storage area that a plurality of companies is authorized to access will be referred to as "shared storage area".

The server device 1 copies the product information in response to reception of the permission information from the company terminal 2. That is, the company terminal 2 transmits the permission information to the server device 1 to cause the server device 1 to copy the product information identified by the permission information from the dedicated storage area of the target company to the shared storage area accessible to the downstream company.

In the third phase, the linking unit 113 of the server device 1 receives a linking request from the linking request unit 213 of the company terminal 2, and links the pieces of product information based on the received linking request.

First, the linking unit 113 receives the linking request from the company terminal 2. The linking request is transmitted from the company terminal 2 of the downstream company. In the example of FIG. 9, it is assumed that the company terminal 2 of the company A transmits the linking request. The linking request includes a company ID and a product ID of a target incorporated product. The linking unit 113 acquires product information stored in the storage area accessible to the company, and generates a list of the acquired product information. In the example of FIG. 9, the company A can access the product information B stored in the storage area AB. Therefore, the product information B can be selected as a linking destination in the company terminal 2 of the company A.

The linking request unit 213 of the company terminal 2 presents the list to an operator, and prompts the operator to select products to be linked. In this example, the product A and the product B are linking targets. For example, the operator inputs, via the input/output device 24, information indicating that the product B is an upstream product for the product A. The linking request unit 213 transmits data for associating the upstream product (product B) and the downstream product (product A) with each other (linking data) to the linking unit 113.

As described with reference to FIG. 8, the product information includes the field related to the product to be linked (linking-related information). Based on the linking data, the linking unit 113 stores information associated with the product information B (i.e., the upstream product) in the linking-related information of the product information A. For example, the linking-related information stores an identifier of the upstream product and an identifier of the company that produces the upstream product.

The linking-related information may store, for example, a pointer to the linking destination product information. The pointer indicates, for example, an address of the product information associated with the upstream product. Through the process described above, a part of the tree structure is formed with the product information on the downstream product as a parent node and the product information on the upstream product as a child node.

No further linking is performed at the terminal end of the product tree. In this case, the linking request unit 213 transmits data indicating that the product is the terminal end of the tree instead of transmitting the linking data. When the data is received, the linking unit 113 sets "1" in the termination flag field of the corresponding product information. That is, the "process for setting linking destination upstream product" or the "process for setting termination flag" is executed in the third phase.

In the fourth phase, the information providing unit 114 of the server device 1 generates information on the product tree based on the stored pieces of product information, and outputs the information on the product tree. The generation of the information on the product tree can include, for example, a process for generating various types of information on the products (e.g., information on traceability and an image showing the linking relationship among the products in a tree diagram) after links between nodes are formed by linking the pieces of product information. To generate the information on the product tree, it is necessary that all the pieces of product information have been linked and the termination flags of all the leaf nodes have been set to "1". The information providing unit 114 can appropriately generate the information when such conditions are satisfied.

As described with reference to FIG. 2, the product tree in the present embodiment is a tree diagram showing the supply relationships among the pieces of product information in the supply chain. The information providing unit 114 can generate the image showing the tree diagram based on the pieces of product information.

When generating the information on the product tree, the information providing unit 114 integrates the pieces of traceability-related information defined in the pieces of product information, and outputs a result of the integration.

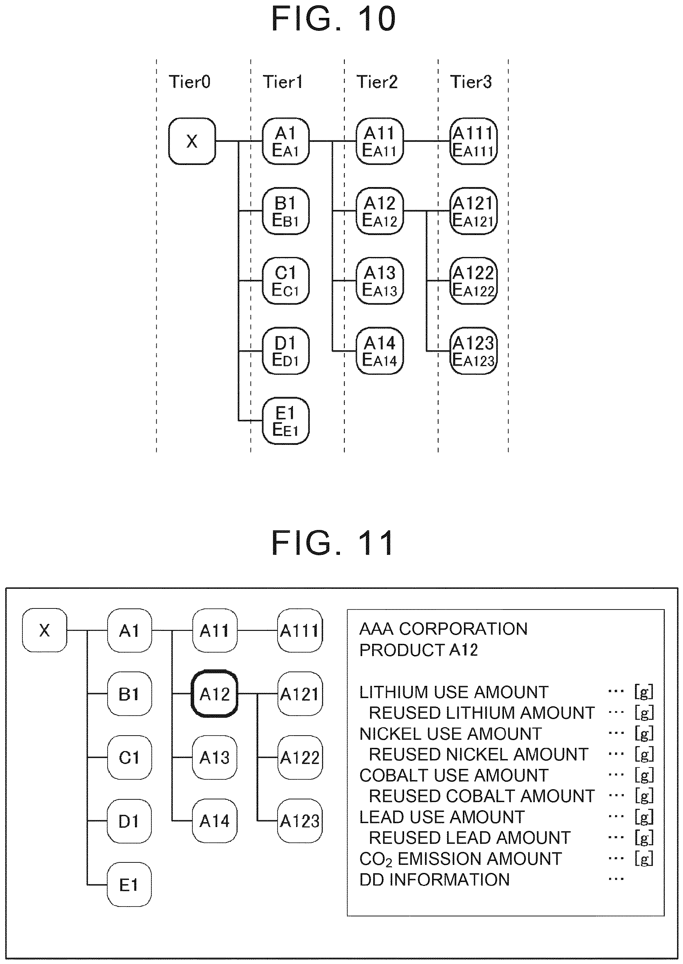

The integration of the pieces of traceability-related information will be described with reference to FIG. 10. FIG. 10 illustrates the products constituting the final product X and in-house CFPs for the individual products. For example, it is assumed that $E_{A12}$ [g] of carbon dioxide is emitted in a process for producing the product A12 in the figure. It is also assumed that this product is composed of three upstream products A121 to A123. A value obtained by converting the total amount of greenhouse gases emitted until a certain product is produced into an amount of carbon dioxide (hereinafter referred to as "integrated CFP") can be obtained by repeating a process of transferring the amount of $CO_2$ emission associated with an upstream product to a downstream product between companies at two adjacent hierarchical levels from the most upstream product at the leaf node to the product of interest.

When a product subjected to integration of pieces of traceability-related information is A12 in the example of FIG. 10, the integrated CFP of the product A12 can be calculated by summing the amounts of $CO_2$ emission associated with the upstream products A121 to A123 for the product A12 and the amount of $CO_2$ emission associated with the product A12. That is, the integrated CFP of the product A12 is as follows.

$$I_{A12} = E_{A12} + E_{A121} \times U_{A121} + E_{A122} \times U_{A122} + E_{A123} \times U_{A123} \ [g]$$

In this expression, $I_{A12}$ is the integrated CFP of the product A12. Further, $E_{A12}$ is the in-house CFP of the product A12. Further, $E_{A121}$, $E_{A122}$, and $E_{A123}$ are $CO_2$ emissions per unit amount (i.e., in-house CFPs per unit amount) when the products A121, A122, and A123 are produced, respectively. Further, $U_{A121}$, $U_{A122}$, and $U_{A123}$ are the amounts of use of the products A121, A122, and A123 in the production of the product A12, respectively. This use amount is an example of the amount of material used per production volume of the product in the traceability-related information.

The integrated value may be stored in the storage unit 12 in association with the product or may be included as a part of the product information. That is, the product information associated with the product A12 may hold both $E_{A12}$ that is the emission amount in the process alone (in-house CFP) and $I_{A12}$ that is the integrated emission amount (integrated CFP).

When a product subjected to integration of pieces of traceability-related information is the product A1, the integrated CFP of the product A1 can be calculated by integrating the amount of $CO_2$ emission associated with the product A1 and the amounts of $CO_2$ emission associated with the upstream products A11 to A14 for the product A1. The upstream product A11 incorporates a further upstream product A111, and the upstream product A12 incorporates the further upstream products A121 to A123. Therefore, when calculating the integrated CFP of the product A1, $CO_2$ during production of the product A111 and the products A121 to A123 is also taken into consideration. That is, the integrated CFP of the upstream product A11 is used as the amount of $CO_2$ emission associated with the product A11. The integrated CFP of the upstream product A12 is used as the amount of $CO_2$ emission associated with the product A12. The total amount of $CO_2$ emission of the final product (product of the most downstream company) (i.e., the integrated CFP of the final product) can be obtained by sequentially executing the above calculation from the product of the most upstream company to the final product.

As described above, post-integration traceability-related information (e.g., the integrated CFP of an upstream product) is reused when performing integration for a downstream product. By executing this process at each hierarchical level starting from the most upstream side, the traceability-related information is sequentially transferred in the downstream direction. When the traceability-related information is finally transferred to the final product, the traceability-related information associated with the entire period until the final product is produced can be obtained.

In this way, when generating the information on the product tree, the information providing unit 114 may repeat the process of sequentially integrating the pieces of traceability-related information defined in the pieces of product information from the most upstream side to the most downstream side. In the above example, the amount of carbon dioxide emission is exemplified as the integration target, but the traceability-related information that is the integration target may be a recycling rate related to a predetermined raw material, a score related to due diligence, etc. When the traceability-related information is a numerical value, the integration may be performed by numerical calculation. When the traceability-related information is non-numerical information (e.g., due diligence-related information), the integration may simply be information collection.

In another example, the product information may include information indicating the location of the traceability-related information of the corresponding product (hereinafter referred to as "location information"; typically address or pointer). In this case, the traceability-related information need not be included in the product information. The integration may be collection of the location information included in the product information.

The information providing unit 114 may output the generated product tree in an image format. The information providing unit 114 may simultaneously output the traceability-related information associated with any product.

FIG. 11 shows an example of a screen in which the product tree is output as an image. The illustrated screen includes an image showing a tree diagram of the supply relationships among the products constituting the final product. When any product is selected, the traceability-related information associated with the product or the result of the integration of the pieces of traceability-related information associated with the entire period until the product is produced (e.g., integrated CFP: amount of carbon dioxide emission) can be viewed. FIG. 11 illustrates image display for a result of integration of pieces of traceability-related information when the product A12 is selected. Such information can be output via the input/output device 14 of the server device 1 based on an operation performed by the operator of the server device 1.

The information providing unit 114 may provide the generated product tree to the company terminal 2 in response to a request from the company terminal 2 (information acquiring unit 214). It may be inappropriate to disclose the entire product tree to a specific company. Therefore, when providing the product tree to the company terminal 2 associated with a certain company, the information providing unit 114 may perform a process for hiding a range that the company is not authorized to access. The information providing unit 114 stores information on the generated product tree in the storage unit 12.

Process for Giving Incentive

As described above, in the present embodiment, the predetermined condition to be satisfied is set for the final product X about the predetermined traceability item. Examples of the predetermined condition include a reduction in the CFP (integrated CFP), an increase in the recycling rate of a predetermined raw material, and an increase in the score of due diligence-related information. The server device 1 executes a process for giving an incentive to the supplier of each incorporated product based on the contribution rate of each incorporated product to the satisfaction of the predetermined condition in the final product X. At this time, the control unit 11 of the server device 1 identifies a plurality of incorporated products to be subjected to incentive setting by tracing the product tree stored in the storage unit 12 in association with the final product X. That is, in the server device 1, the process for giving the incentive is executed in a state in which the information on the product tree for the final product X generated by the above generation method is stored in the storage unit 12.

The control unit 11 gives an advance notice about the incentive setting to the supplier of each incorporated product. The control unit 11 calculates the contribution rate of each incorporated product based on the traceability-related information of each incorporated product, and determines the amount of the incentive to be given to each supplier.

Hereinafter, details of the process for giving the incentive will be described taking an exemplary case where the predetermined condition set for the final product X is a reduction in the CFP (integrated CFP). In this case, a predetermined period is set as an evaluation target for giving the incentive. The control unit 11 transmits information indicating that the evaluation target traceability item is the CFP and information on the predetermined period (start and end of the predetermined period) to the company terminal 2 of the supplier of each incorporated product as an advance notice about the incentive setting. Thus, the supplier of each incorporated product can grasp the traceability item and the predetermined period in advance as the evaluation targets for giving the incentive.

The control unit 11 executes a process for setting the incentive for each incorporated product after the predetermined period has elapsed. At this time, the contribution rate calculating unit 115 of the control unit 11 calculates the amount of improvement in the in-house CFP (the amount of reduction in the in-house CFP) in the predetermined period for each incorporated product of the final product X. In each storage area of the storage unit 12, the product information received from each company terminal 2 is stored together with a time stamp. Therefore, the contribution rate calculating unit 115 extracts the in-house CFP from the product information on each incorporated product stored in each storage area of the storage unit 12 in association with the start and end of the predetermined period. The contribution rate calculating unit 115 calculates the amount of reduction in the in-house CFP in the predetermined period for each incorporated product based on the in-house CFPs at the start and end of the predetermined period.

The contribution rate calculating unit 115 calculates the contribution rate of each incorporated product to the reduction in the integrated CFP of the final product X based on the amount of reduction in the in-house CFP in the predetermined period for each incorporated product. At this time, the contribution rate calculating unit 115 calculates a higher contribution rate of a certain incorporated product as the amount of reduction in the in-house CFP in the predetermined period for that incorporated product increases.

Next, the incentive setting unit 116 of the control unit 11 determines the amount of the incentive for each incorporated product based on the contribution rate of each incorporated product. In one example, the total amount of incentives may be predetermined. When the total amount of incentives to be given to the suppliers is predetermined, the incentive setting unit 116 may specify the ratio of the incentive to be given to each incorporated product based on the contribution rate of each incorporated product, and determine the amount of the incentive for each incorporated product by dividing the predetermined total amount by the specified ratio. In another example, the total amount of incentives may be set dynamically based on the contribution rate of each incorporated product. In this case, the incentive setting unit 116 may determine the amount of the incentive for each incorporated product by simply multiplying the contribution rate of each incorporated product by a predetermined value. In another example, a functional formula for calculating the amount of the incentive may be given, and the incentive setting unit 116 may determine the amount of the incentive for each incorporated product by substituting the contribution rate of each incorporated product into the functional formula and executing a calculation process based on the functional formula.

The incentive setting unit 116 transmits information on the determined amount of the incentive for each incorporated product to the company terminal 2 of the supplier of each incorporated product. Thus, the account of the supplier of each incorporated product is notified about the information on the amount of the incentive. The incentive setting unit 116 need not transmit the information on the amount of the incentive to the company terminal 2 of the supplier. For example, in response to an incentive disclosure request received from the company terminal 2 of a certain supplier, the incentive setting unit 116 may output the information on the amount of the incentive to the account of the supplier.

Processing Flow

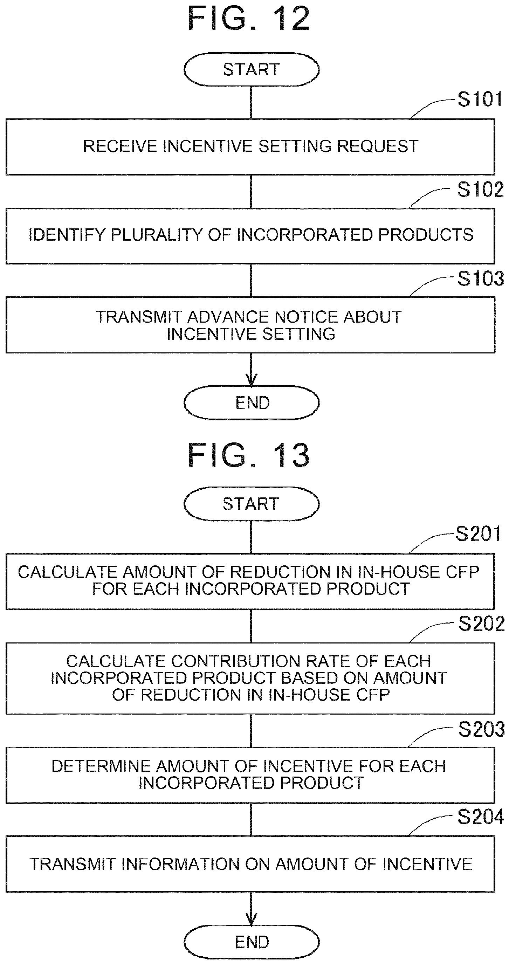

Flows of the process for giving the incentive to be executed by the server device 1 will be described with reference to FIGS. 12 and 13. FIGS. 12 and 13 show processes when the predetermined condition set for the final product X is a reduction in the CFP (integrated CFP). FIG. 12 shows a process for giving an advance notice about incentive setting to the supplier of each incorporated product (hereinafter referred to as "advance notice process"). FIG. 13 shows a process for setting the incentive for each incorporated product (hereinafter referred to as "setting process").

In the advance notice process shown in FIG. 12, the control unit 11 of the server device 1 first receives an incentive setting request for each incorporated product of the final product X in S101. The incentive setting request includes information on evaluation targets. Specifically, the information on the evaluation targets is information indicating the final product, the predetermined traceability item, the predetermined condition, and the predetermined period. The incentive setting request including this information may be input by an operator of the OEM company logging into the server device 1 by using the account of the OEM company.

In S102, the control unit 11 identifies a plurality of incorporated products included in the final product X by tracing tree information stored in the storage unit 12 in association with the final product X. In S103, the control unit 11 transmits an advance notice about incentive setting to the company terminal 2 of the supplier of each incorporated product. The advance notice about the incentive setting includes information indicating that the evaluation target traceability item is the CFP and information on the predetermined period. When the advance notice is transmitted from the server device 1 to the company terminal 2, the notification receiving unit 215 of the company terminal 2 receives the advance notice and outputs the received advance notice.

The setting process shown in FIG. 13 is executed after the predetermined evaluation target period has elapsed. In the setting process shown in FIG. 13, the contribution rate calculating unit 115 of the control unit 11 first calculates the amount of reduction in the in-house CFP in the predetermined period for each incorporated product included in the final product X in S201. At this time, the contribution rate calculating unit 115 extracts the in-house CFPs at the start and end of the predetermined period from each storage area of the storage unit 12. The contribution rate calculating unit 115 calculates a difference between the in-house CFP at the start of the predetermined period and the in-house CFP at the end of the predetermined period as the amount of reduction in the in-house CFP in the predetermined period. In S202, the contribution rate calculating unit 115 calculates a contribution rate of each incorporated product to the reduction in the integrated CFP of the final product X based on the amount of reduction in the in-house CFP in the predetermined period for each incorporated product that is calculated in S201.

In S203, the incentive setting unit 116 of the control unit 11 determines the amount of the incentive for each incorporated product based on the contribution rate of each incorporated product that is calculated in S202. In S204, the incentive setting unit 116 transmits information on the amount of the incentive for each incorporated product that is determined in S203 to the company terminal 2 of the supplier of each incorporated product. Instead of the process of S204, the incentive setting unit 116 may output the information on the amount of the incentive to the account of a certain supplier in response to an incentive disclosure request received from the company terminal 2 of the supplier as described above.

According to the processes shown in FIGS. 12 and 13, the incentive is given to the supplier of each incorporated product based on the contribution rate of the amount of reduction in the in-house CFP to the condition that is the reduction in the integrated CFP of the final product X in the predetermined period. Therefore, it is possible to increase the motivation of the supplier of each incorporated product to reduce the in-house CFP in the predetermined period. That is, the suppliers of the incorporated products can be prompted to contribute to achieving the reduction in the integrated CFP of the final product X. Even if the structure of the supply chain related to the final product X is complicated, appropriate amounts of incentives can be given to the suppliers.

In the present embodiment, even when the predetermined evaluation target traceability item is a recycling rate of a predetermined raw material, the incentives can be given to the suppliers of the incorporated products by the server device 1 executing the same process as described above. In this case, an increase in the recycling rate of the predetermined raw material contained in the final product X may be set as the predetermined condition to be satisfied. The incentive may be given to the supplier of each incorporated product based on the contribution rate of each incorporated product to the satisfaction of the condition that is the increase in the recycling rate of the predetermined raw material contained in the final product X in the predetermined period. Therefore, it is possible to increase the motivation of the supplier of each incorporated product to increase the recycling rate of the predetermined raw material in the predetermined period.

In the present embodiment, even when the predetermined evaluation target traceability item is a score of due diligence-related information, the incentives can be given to the suppliers of the incorporated products by the server device 1 executing the same process as described above. In this case, an increase in the score of the due diligence-related information of the final product X may be set as the predetermined condition to be satisfied. The incentive may be given to the supplier of each incorporated product based on the contribution rate of each incorporated product to the satisfaction of the condition that is the increase in the score of the due diligence-related information of the final product X in the predetermined period. Therefore, it is possible to increase the motivation of the supplier of each incorporated product to increase the score of the due diligence-related information in the predetermined period.

In the present embodiment, a target improvement amount of the predetermined traceability item in the predetermined period may be set as the predetermined condition to be satisfied for the final product X. In this case, the contribution rate calculating unit 115 calculates contribution rates of the incorporated products to the achievement of the target improvement amount of the predetermined traceability item of the final product X in the predetermined period.

Specifically, a target reduction amount of the integrated CFP in the predetermined period may be set as the predetermined condition to be satisfied for the final product X. In this case, the contribution rate calculating unit 115 calculates, as the contribution rate of each incorporated product, the degree of contribution of the amount of reduction in the in-house CFP in the predetermined period for each incorporated product to the achievement of the target reduction amount of the integrated CFP of the final product X.

Each company can reduce an apparent amount of $CO_2$ emission by purchasing carbon credit. Even if the supplier reduces the in-house CFP of the incorporated product by purchasing the carbon credit, the reduction in the in-house CFP by the purchase of the carbon credit does not substantially contribute to the reduction in the integrated CFP of the final product X.

In the present embodiment, when a certain supplier has purchased carbon credit, the product information on the incorporated product of the supplier may include information indicating the reduction in the in-house CFP by the purchase of the carbon credit. Specifically, when the value of the in-house CFP in the product information is a value based on the reduction by the purchase of the carbon credit, a value indicating the ratio of the reduction (e.g., "x%") may be input to the product information as the information indicating the reduction by the purchase of the carbon credit.

When calculating the contribution rate of the incorporated product to the reduction in the integrated CFP of the final product X based on the amount of reduction in the in-house CFP in the predetermined period for the incorporated product, the contribution rate calculating unit 115 may determine the contribution rate by referring to the information indicating the reduction by the purchase of the carbon credit. That is, when the amount of reduction in the in-house CFP in the predetermined period that is calculated based on the in-house CFPs at the start and end of the predetermined period that are extracted from the product information is the same, the contribution rate calculating unit 115 may calculate a higher contribution rate of the incorporated product as the reduction by the purchase of the carbon credit decreases.

Therefore, when the supplier reduces the in-house CFP of the incorporated product in the predetermined period by reducing the actual amount of $CO_2$ emission during the production of the incorporated product rather than by purchasing carbon credit, a larger amount of the incentive can be given to the supplier. Therefore, it is possible to increase the motivation of the supplier of each incorporated product to reduce the actual in-house CFP in the predetermined period.

Second Embodiment

The configuration of a system according to the present embodiment is the same as that of the system according to the first embodiment. In the present embodiment as well, information on the product tree for the final product X is generated by executing the same processes as the processes according to the first embodiment in the server device 1 and each company terminal 2. The generated information on the product tree is stored in the storage unit 12 of the server device 1. In the present embodiment as well, the server device 1 executes the process for giving the incentive to the supplier of each incorporated product included in the final product X.

Process for Giving Incentive

Hereinafter, the process for giving the incentive to the supplier of each incorporated product according to the present embodiment will be described. In the present embodiment, a target value is set as the predetermined condition to be satisfied for the final product X about the predetermined traceability item. For example, a target value of the CFP (integrated CFP), a target value of the recycling rate of a predetermined raw material, or a target value of the score of due diligence-related information is set as the predetermined condition.

The control unit 11 of the server device 1 identifies a plurality of incorporated products to be subjected to incentive setting by tracing the product tree stored in the storage unit 12 in association with the final product X. The control unit 11 sets a reference value for the value related to the predetermined evaluation target traceability item for each incorporated product based on the target value of the predetermined traceability item that is set for the final product X. At this time, the reference value for each incorporated product is set to a value at which the final product X can achieve the target value of the predetermined traceability item when the value related to the predetermined traceability item for each incorporated product satisfies the reference value. The reference value may be set as a different value for each type of incorporated product or for each tier to which the supplier of the incorporated product belongs. The reference value may be set as a uniform value for all the incorporated products.

The control unit 11 calculates the contribution rate of each incorporated product to the achievement of the target value of the predetermined traceability item of the final product X based on the degree of achievement of the value related to the predetermined traceability item in the product information on each incorporated product relative to the reference value.

Hereinafter, details of the process for giving the incentive will be described taking an exemplary case where a target value of the CFP (integrated CFP) is set for the final product X. In this case, the contribution rate calculating unit 115 of the control unit 11 sets a reference value of the in-house CFP for each incorporated product based on the target value of the CFP (integrated CFP) set for the final product X. The amount of $CO_2$ emission during the production of the incorporated product may differ depending on the type of the incorporated product. Therefore, the reference value of the in-house CFP may be set to a larger value for the incorporated product that is likely to emit more $CO_2$ during the production.

The contribution rate calculating unit 115 extracts the in-house CFP from the product information on each incorporated product stored in each storage area of the storage unit 12. At this time, the contribution rate calculating unit 115 extracts the in-house CFP from the latest product information on each incorporated product stored in each storage area of the storage unit 12. The contribution rate calculating unit 115 calculates the degree of achievement of the extracted in-house CFP of each incorporated product relative to the reference value set for each incorporated product. The contribution rate calculating unit 115 calculates the contribution rate of each incorporated product to the achievement of the target value of the CFP (integrated CFP) of the final product X based on the degree of achievement of the in-house CFP extracted from the product information relative to the reference value. At this time, the contribution rate calculating unit 115 calculates a higher contribution rate of a certain extracted incorporated product as the degree of achievement of the in-house CFP of the incorporated product relative to the reference value increases.

Next, the incentive setting unit 116 of the control unit 11 determines the amount of the incentive for each incorporated product based on the contribution rate of each incorporated product as in the first embodiment. The incentive setting unit 116 transmits information on the determined amount of the incentive for each incorporated product to the company terminal 2 of the supplier of each incorporated product. In the present embodiment as well as the first embodiment, the incentive setting unit 116 need not transmit the information on the amount of the incentive to the company terminal 2 of the supplier.

Processing Flow

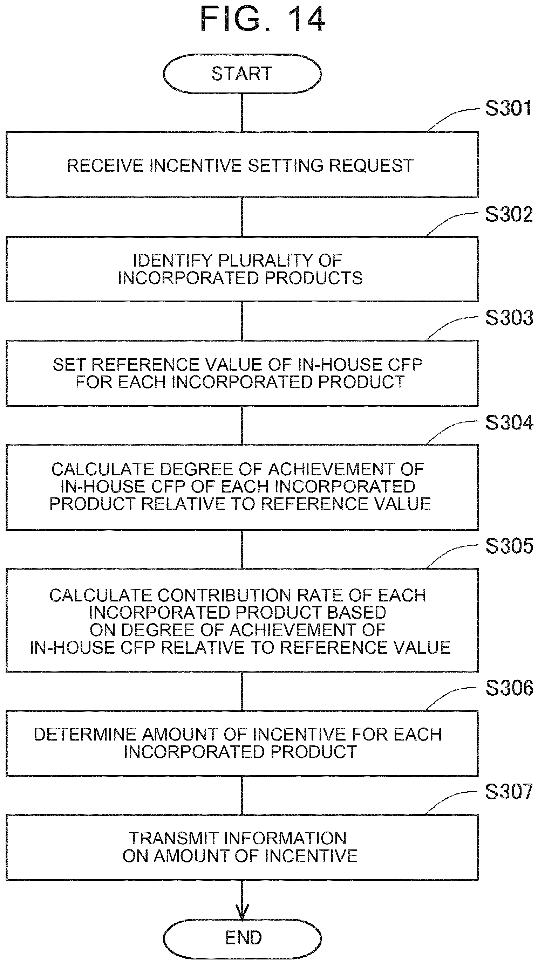

A flow of the process for giving the incentive to be executed by the server device 1 will be described with reference to FIG. 14. FIG. 14 shows a process when a target value of the CFP (integrated CFP) is set for the final product X.

In the process shown in FIG. 14, the control unit 11 of the server device 1 first receives an incentive setting request for each incorporated product of the final product X in S301. The incentive setting request includes information on evaluation targets. Specifically, the information on the evaluation targets is information indicating the final product, the predetermined traceability item, and the target value of the predetermined traceability item.

In S302, the control unit 11 identifies a plurality of incorporated products included in the final product X by tracing tree information stored in the storage unit 12 in association with the final product X. The process of S302 is the same as the process of S 102 in the flow shown in FIG. 12. In S303, the contribution rate calculating unit 115 of the control unit 11 sets a reference value of the in-house CFP for each incorporated product based on the target value of the CFP (integrated CFP) for the final product X. In S304, the contribution rate calculating unit 115 extracts the in-house CFP from the latest product information on each incorporated product stored in each storage area of the storage unit 12. The contribution rate calculating unit 115 calculates the degree of achievement of the extracted in-house CFP of each incorporated product relative to the reference value of the in-house CFP that is set in S303. In S305, the contribution rate calculating unit 115 calculates the contribution rate of each incorporated product to the achievement of the target value of the CFP (integrated CFP) of the final product X based on the degree of achievement of the in-house CFP calculated in S304 relative to the reference value.

In S306, the incentive setting unit 116 of the control unit 11 determines the amount of the incentive for each incorporated product based on the contribution rate of each incorporated product that is calculated in S305. In S307, the incentive setting unit 116 transmits information on the amount of the incentive for each incorporated product that is determined in S306 to the company terminal 2 of the supplier of each incorporated product. The process of S306 and S307 is the same as the process of S203 and S204 in the flow shown in FIG. 13.

According to the process shown in FIG. 14, the incentive is given to the supplier of each incorporated product based on the contribution rate of the in-house CFP (latest in-house CFP) to the condition that is the achievement of the target value of the CFP (integrated CFP) set for the final product X. Therefore, it is possible to increase the motivation of the supplier of each incorporated product to regularly reduce the in-house CFP. That is, the suppliers of the incorporated products can be prompted to contribute to achieving the target value of the integrated CFP of the final product X. Even if the structure of the supply chain related to the final product X is complicated, appropriate amounts of incentives can be given to the suppliers.

In the present embodiment, even when the predetermined evaluation target traceability item is a recycling rate of a predetermined raw material, the incentives can be given to the suppliers of the incorporated products by the server device 1 executing the same process as described above. In this case, a target value may be set for the recycling rate of the predetermined raw material contained in the final product X. A reference value of the recycling rate of the predetermined raw material for each incorporated product may be set based on the target value of the recycling rate of the predetermined raw material that is set for the final product X. The incentive may be given to the supplier of each incorporated product based on the contribution rate of each incorporated product to the achievement of the target value of the recycling rate of the predetermined raw material contained in the final product X. Therefore, it is possible to increase the motivation of the supplier of each incorporated product to regularly increase the recycling rate of the predetermined raw material.

In the present embodiment, even when the predetermined evaluation target traceability item is a score of due diligence-related information, the incentives can be given to the suppliers of the incorporated products by the server device 1 executing the same process as described above. In this case, a target value may be set for the score of the due diligence-related information of the final product X. A reference value of the score of the due diligence-related information for each incorporated product may be set based on the target value of the score of the due diligence-related information that is set for the final product X. The incentive may be given to the supplier of each incorporated product based on the contribution rate of each incorporated product to the achievement of the target value of the score of the due diligence-related information of the final product X. Therefore, it is possible to increase the motivation of the supplier of each incorporated product to regularly increase the score of the due diligence-related information.

In the present embodiment as well as the first embodiment, when a certain supplier has purchased carbon credit, the product information on the incorporated product of the supplier may include information indicating the reduction in the in-house CFP by the purchase of the carbon credit.

When calculating the contribution rate of the incorporated product to the achievement of the target value of the integrated CFP of the final product X based on the degree of achievement of the in-house CFP extracted from the product information relative to the reference value, the contribution rate calculating unit 115 may determine the contribution rate by referring to the information indicating the reduction in the in-house CFP by the purchase of the carbon credit. Specifically, when the value of the in-house CFP extracted from the product information is the same, the contribution rate calculating unit 115 may calculate a higher degree of achievement of the in-house CFP relative to the reference value as the reduction in the in-house CFP by the purchase of the carbon credit decreases. As a result, a higher contribution rate of the incorporated product to the achievement of the target value of the integrated CFP of the final product X is calculated as the reduction in the in-house CFP by the purchase of the carbon credit decreases.

Therefore, when the supplier reduces the in-house CFP of the incorporated product by reducing the actual amount of $CO_2$ emission during the production of the incorporated product rather than by purchasing carbon credit, a larger amount of the incentive can be given to the supplier. Therefore, it is possible to increase the motivation of the supplier of each incorporated product to reduce the actual in-house CFP.

Third Embodiment

The configuration of a system according to the present embodiment is the same as that of the system according to the first embodiment. In the present embodiment as well, information on the product tree for the final product X is generated by executing the same processes as the processes according to the first embodiment in the server device 1 and each company terminal 2. The generated information on the product tree is stored in the storage unit 12 of the server device 1. In the present embodiment as well, the server device 1 executes the process for giving the incentive to the supplier of each incorporated product included in the final product X.

In the present embodiment, inventory data may be input to the traceability-related information in the product information on each incorporated product. It is preferable that actual measurement data be used as the traceability-related information in the product information. The actual measurement data is calculated based on data actually measured, for example, when the incorporated product is produced by a supplier company of the incorporated product. Depending on the company, it may be difficult to actually measure data on the traceability item due to a lack of equipment at a production site of the incorporated product, etc. In such a case, inventory data is input to the traceability-related information field in the product information. The inventory data is predetermined as a typical value of each traceability item.

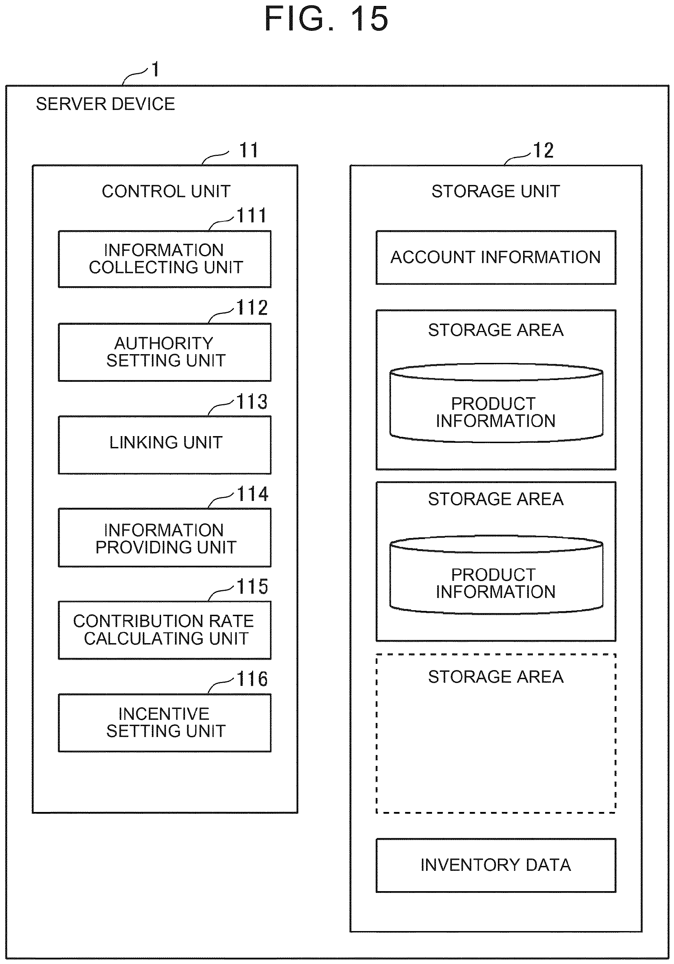

In the present embodiment, the inventory data for each traceability item is stored in the server device 1. FIG. 15 schematically shows an example of the software configuration of the server device 1 according to the present embodiment. In the present embodiment as well, the server device 1 includes the control unit 11 and the storage unit 12. In the present embodiment, a database for storing the inventory data is constructed in the storage unit 12. In this inventory data database, the inventory data for each traceability item is stored for each type or tier of the incorporated product. By accessing the server device 1 via the company terminal 2, the operator of each company can acquire inventory data on a desired traceability item from the database.

When the inventory data acquired from the server device 1 is input to the traceability-related information field in the product information, information indicating that the information on the traceability item to be input is inventory data is also input to the product information. For example, when a supplier company of a certain incorporated product has difficulty in actually measuring the in-house CFP, the operator of the company acquires inventory data on the in-house CFP associated with the incorporated product produced by the company from the server device 1. The acquired inventory data on the in-house CFP is input to the traceability-related information field in the product information on the incorporated product produced by the company. At this time, information indicating that the information on the in-house CFP in the traceability-related information is the inventory data is also input to the product information. Thus, it is possible to distinguish whether the information on each traceability item in the product information is the inventory data or the actual measurement data.

The inventory data for each traceability item need not be held in the server device 1. For example, the inventory data may be held in a device accessible to the company terminal 2 of each company except the server device 1. The inventory data may be held in the company terminal 2 of each company.

Process for Giving Incentive

As described above, the inventory data on the traceability item is not data obtained by actually measuring data on the traceability item. Therefore, when the input ratios of the inventory data increase in the pieces of product information on the incorporated products included in the final product X, the integration result for the predetermined traceability item that is calculated for the final product X may deviate from the actual value.

In the present embodiment, a reduction in the input ratios of the inventory data in the pieces of product information on the incorporated products is set as the predetermined condition to be satisfied for the final product X about the predetermined traceability item. Even if the supplier company of the incorporated product has difficulty in actually measuring data on the predetermined traceability item due to a lack of equipment etc., the data can actually be measured by eliminating the cause of the difficulty through installation of new equipment etc. The company that has become able to actually measure data on the predetermined traceability item can change the information on the predetermined traceability item input to the product information on the incorporated product from the inventory data to the actual measurement data. In that case, the information on the predetermined traceability item in the product information stored in the storage unit 12 of the server device 1 is updated from the inventory data to the actual measurement data. As a result, the input ratios of the inventory data on the predetermined traceability item in the pieces of product information on the incorporated products are reduced.

In the present embodiment, the control unit 11 calculates the contribution rate of the incorporated product in which the information on the predetermined evaluation target traceability item is updated from the inventory data to the actual measurement data in the product information stored in the storage unit 12. The contribution rate is a rate of contribution to the satisfaction of the condition set for the final product X on the reduction in the input ratios of inventory data on the predetermined traceability item in the pieces of product information on the incorporated products.

Hereinafter, details of the process for giving the incentive will be described taking an exemplary case where the predetermined condition set for the final product X is a reduction in the input ratios of inventory data on the CFP (in-house CFP) in the pieces of product information on the incorporated products. In this case, the contribution rate calculating unit 115 of the control unit 11 determines whether the information on the in-house CFP is updated from the inventory data to actual measurement data in the product information on each incorporated product that is stored in each storage area of the storage unit 12. Specifically, the contribution rate calculating unit 115 determines whether actual measurement data is input as the information on the in-house CFP in the latest product information for the incorporated product in which the inventory data was input as the information on the in-house CFP in the past product information. This determination is made based on whether the latest product information includes information indicating that the information on the in-house CFP is the inventory data.

The contribution rate calculating unit 115 calculates the contribution rate to the satisfaction of the predetermined condition set for the final product X about the incorporated product in which the information on the in-house CFP is updated from the inventory data to the actual measurement data in the product information. At this time, the contribution rate calculating unit 115 may calculate a uniform contribution rate for the target incorporated products. When the value of the in-house CFP is reduced by updating the information on the in-house CFP from the inventory data to the actual measurement data in the product information, the contribution rate calculating unit 115 may calculate the contribution rate based on the amount of reduction.

Next, the incentive setting unit 116 of the control unit 11 determines the amount of the incentive for each incorporated product based on the contribution rate of each incorporated product as in the first embodiment. The incentive setting unit 116 transmits information on the determined amount of the incentive for each incorporated product to the company terminal 2 of the supplier of each incorporated product. In the present embodiment as well as the first embodiment, the incentive setting unit 116 need not transmit the information on the amount of the incentive to the company terminal 2 of the supplier.

Processing Flow

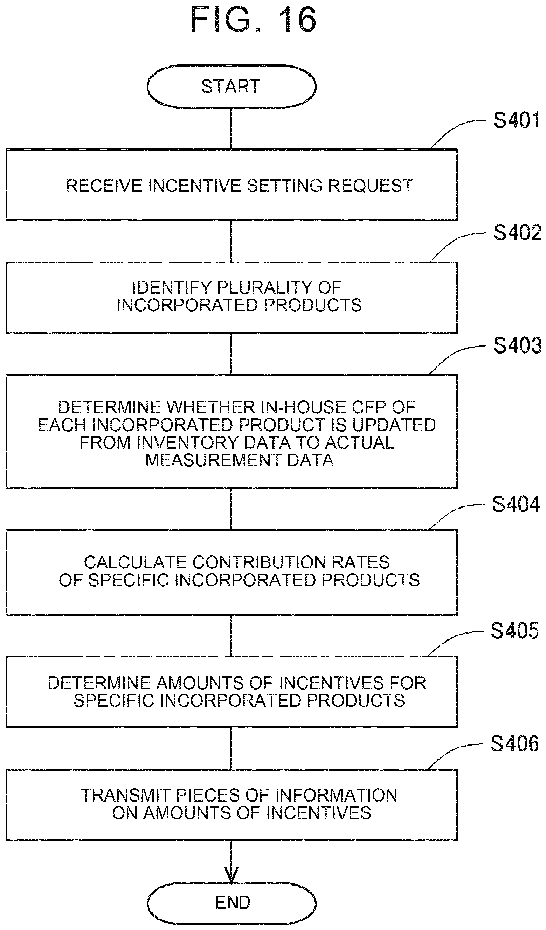

A flow of the process for giving the incentive to be executed by the server device 1 will be described with reference to FIG. 16. FIG. 16 shows a process when the predetermined condition set for the final product X is the reduction in the input ratios of inventory data on the CFP (in-house CFP) in the pieces of product information on the incorporated products.

In the process shown in FIG. 16, the control unit 11 of the server device 1 first receives an incentive setting request for each incorporated product of the final product X in S401. The incentive setting request includes information on evaluation targets. Specifically, the information on the evaluation targets is information indicating the final product and the predetermined traceability item.

In S402, the control unit 11 identifies a plurality of incorporated products included in the final product X by tracing tree information stored in the storage unit 12 in association with the final product X. The process of S402 is the same as the process of S 102 in the flow shown in FIG. 12. In S403, the contribution rate calculating unit 115 of the control unit 11 determines whether the information on the in-house CFP is updated from inventory data to actual measurement data in the latest product information on each incorporated product that is stored in each storage area of the storage unit 12. Hereinafter, the incorporated product in which the information on the in-house CFP is updated from the inventory data to the actual measurement data in the product information will be referred to as "specific incorporated product". In S404, the contribution rate calculating unit 115 calculates, for one or more specific incorporated products, the contribution rates to the reduction in the input ratios of inventory data on the in-house CFP in the pieces of product information on the incorporated products.

In S405, the incentive setting unit 116 of the control unit 11 determines the amounts of the incentives for the one or more specific incorporated products based on the contribution rates of the specific incorporated products that are calculated in S404. In S406, the incentive setting unit 116 transmits pieces of information on the amounts of the incentives for the one or more specific incorporated products that are determined in S405 to the company terminals 2 of the suppliers of the specific incorporated products. The process of S405 and S406 is the same as the process of S203 and S204 in the flow shown in FIG. 13.

According to the process shown in FIG. 16, the incentives are given to the suppliers of the one or more specific incorporated products in which the information on the in-house CFP is updated from the inventory data to the actual measurement data in the pieces of product information. Therefore, it is possible to increase the motivation of the supplier of each incorporated product to acquire the actual measurement data on the in-house CFP. That is, the suppliers of the incorporated products can be prompted to contribute to achieving the reduction in the input ratios of inventory data on the in-house CFP in the pieces of product information on the incorporated products included in the final product X. Even if the structure of the supply chain related to the final product X is complicated, the incentives can be given to the suppliers of the specific incorporated products.

In the present embodiment, even when the predetermined evaluation target traceability item is a recycling rate of a predetermined raw material, the incentives can be given to the suppliers of the specific incorporated products by the server device 1 executing the same process as described above. In this case, the specific incorporated product is an incorporated product in which information on the recycling rate of the predetermined raw material is updated from inventory data to actual measurement data in the product information. In this case, it is possible to increase the motivation of the supplier of each incorporated product to acquire the actual measurement data on the recycling rate of the predetermined raw material.

In the present embodiment, even when the predetermined evaluation target traceability item is a score of due diligence-related information, the incentives can be given to the suppliers of the specific incorporated products by the server device 1 executing the same process as described above. In this case, the specific incorporated product is an incorporated product in which information on the score of the due diligence-related information is updated from inventory data to actual measurement data in the product information. In this case, it is possible to increase the motivation of the supplier of each incorporated product to acquire the actual measurement data on the score of the due diligence-related information.

In the process for giving the incentive, the contribution rate calculation methods according to the above embodiments may be combined when calculating the contribution rate of each incorporated product to the satisfaction of the predetermined condition set for the final product X.

First Modification

In the process for giving the incentive according to each of the above embodiments, a plurality of suppliers to be subjected to the incentive giving may be selected from among the suppliers of all the incorporated products that belong to the supply chain related to the final product X. Specifically, the incentive setting request for each incorporated product of the final product X that is received by the server device 1 may include information on a range of the selected suppliers to be subjected to the incentive giving (hereinafter referred to as "selection range"). The range of the selected suppliers to be subjected to the incentive giving may include, for example, suppliers at the same tier or suppliers of the same type of incorporated product.

When the incentive setting request includes the information on the selection range, the control unit 11 further identifies incorporated products of a plurality of suppliers belonging to the selection range from among the incorporated products identified by tracing the tree information associated with the final product X. The control unit 11 executes the process for giving incentives to the incorporated products of the suppliers belonging to the selection range.

According to such a modification, it is possible to increase the motivation of the suppliers belonging to the selection range to contribute to satisfying the predetermined condition set for the final product X about the predetermined traceability item.

Second Modification

The process for giving the incentive according to each of the above embodiments may be executed when the server device 1 receives a request for the incentive from the supplier of the incorporated product. Specifically, the control unit 11 of the server device 1 may receive an incentive setting request for each incorporated product of the final product X from the supplier of any one of the incorporated products. In this case, an operator of the supplier company may input the incentive setting request by logging into the server device 1 via the company terminal 2 by using the account of the company.

According to such a modification, the supplier of the incorporated product can cause the server device 1 to execute the process for giving the incentive at a desired timing. For example, the supplier of the incorporated product can cause the server device 1 to execute the process for giving the incentive at a timing when the contribution rate of its incorporated product to the satisfaction of the predetermined condition set for the final product X about the predetermined traceability item increases. Examples of the timing when the contribution rate of the incorporated product increases include a timing when the in-house CFP is reduced compared to the previous in-house CFP by installing new equipment to the production site of the incorporated product in the company. Examples of the timing when the contribution rate of the incorporated product increases also include a timing when the in-house CFP that was not previously measured can be measured by installing new equipment to the production site of the incorporated product in the company.

Third Modification

In each of the embodiments and modifications described above, the server device 1 is an example of the information processing device. However, the form of the information processing device is not limited to this example. In another example, at least a part of the processes executed by the server device 1 may be executed by each company terminal 2. Typically, all the processes executed by the server device 1 may be executed by each company terminal 2. As a specific example, the company terminal 2 of a company that gives the incentive (e.g., the OEM company) may execute the above series of processes by communicating data with the company terminal 2 of each company that receives the incentive (e.g., the supplier company). In this case, the company terminal 2 of the company that gives the incentive is an example of the information processing device. The company terminal 2 of the company that gives the incentive may hold the information on the product tree, identify the incorporated product based on the information on the product tree, and communicate data with the company terminal 2 of the company of the identified incorporated product. In another example, the server device 1 may hold the information on the product tree and information on access to the product information of each company. The company terminal 2 of the company that gives the incentive may access the server device 1 and refer to the information on the product tree and the information on access to the product information of each company. The company terminal 2 of the company that gives the incentive may execute the information processing related to the incentive giving by executing peer-to-peer data communication with the company terminal 2 of the company of the incorporated product based on the information obtained by the reference.

Fourth Modification

In each of the embodiments and modifications described above, the method for holding the information on the product tree (linking information of each company including the termination flag) may be changed as desired. In another example, a storage area shared among all the companies may be provided in the server device 1 (storage unit 12), and the linking information of each company may be held in the storage area shared among all the companies. In still another example, the dedicated storage area of each company may include a non-encrypted area, and the linking information of each company may be stored in the non-encrypted area of the dedicated storage area of each company. Alternatively, the linking information of each company may be held in an encrypted area of the dedicated storage area of each company. As long as the linking relationships of the product tree can be traced on the system, the configuration and the holding format of the linking information are not particularly limited and may be selected as appropriate depending on embodiments. The pieces of information on the product tree may be held collectively, or may be held separately, for example, by being included in the pieces of product information of the companies. When the product information of each company is held in the company terminal 2 of each company, the linking information of each company may be held in the company terminal 2 of each company.

Fifth Modification

In each of the above embodiments, the access limitation on each company is implemented by providing the dedicated storage area and the shared storage area. However, the method for implementing the access limitation is not limited to such an example, and any method may be used for the implementation.

Sixth Modification

In each of the above embodiments, the storage area of each company may be constructed by any database technology. In one example, the storage area of each company may be constructed by blockchain infrastructure. In this case, at least a part of the information processing related to the incentive giving may be executed by smart contracts.

Other Embodiments

The embodiments described above are merely illustrative, and the present disclosure may be modified as appropriate without departing from the spirit and scope of the present disclosure. The processes and means described in the present disclosure can be combined as desired as long as no technical contradiction occurs.
The process described as being executed by a single device may be executed by a plurality of devices in cooperation. Alternatively, the process described as being executed by different devices may be executed by a single device. In a computer system, the hardware configuration (server configuration) that implements functions can be changed flexibly.
The present disclosure may be embodied such that a computer program that implements the functions described in the above embodiments is supplied to a computer and is read and executed by one or more processors of the computer. The computer program may be provided to the computer by being stored in a non-transitory computer-readable storage medium connectable to a system bus of the computer, or may be provided to the computer via a network. Examples of the non-transitory computer-readable storage medium include any type of disk or disc such as a magnetic disk (floppy (registered trademark) disk, hard disk drive (HDD), etc.) and an optical disc (compact disc ROM (CD-ROM), digital versatile disc (DVD), Blu-ray disc, etc.), and any type of medium suitable for storing electronic instructions, such as a read only memory (ROM), a random access memory (RAM), an EPROM, an electrically erasable programmable ROM (EEPROM), a magnetic card, a flash memory, and an optical card.

**Claims**

1. An information processing device (1) comprising a control unit (11), wherein the control unit (11) is configured to execute:

   acquiring pieces of product information on a plurality of incorporated products incorporated in a target product, the product information including information on a predetermined traceability item for each of the incorporated products;
   calculating a contribution rate of each of the incorporated products to satisfaction of a predetermined condition about the predetermined traceability item of the target product based on the information on the predetermined traceability item in the acquired product information;
   determining an amount of an incentive for each of the incorporated products based on the calculated contribution rate of each of the incorporated products; and
   notifying an account of a supplier of each of the incorporated products about information on the determined amount of the incentive.

2. The information processing device (1) according to claim 1, wherein the calculating the contribution rate of each of the incorporated products includes calculating the contribution rate of each of the incorporated products to be higher as an amount of improvement in a value related to the predetermined traceability item in the product information on each of the incorporated products in a predetermined period increases.

3. The information processing device (1) according to claim 1, wherein the calculating the contribution rate of each of the incorporated products includes calculating the contribution rate of each of the incorporated products to be higher as a degree of achievement of a value related to the predetermined traceability item in the product information on each of the incorporated products relative to a reference value set for each of the incorporated products increases.

4. The information processing device (1) according to any one of claims 1 to 3, wherein:

   the product information on each of the incorporated products includes information indicating whether the information on the predetermined traceability item is inventory data or actual measurement data; and
   the calculating the contribution rate of each of the incorporated products includes calculating the contribution rate of each of the incorporated products under the condition that the information on the predetermined traceability item in the product information on each of the incorporated products is updated from the inventory data to the actual measurement data.

5. The information processing device (1) according to any one of claims 1 to 4, wherein:

   the predetermined condition is that the predetermined traceability item of the target product achieves a predetermined target value; and
   the calculating the contribution rate of each of the incorporated products includes calculating the contribution rate of each of the incorporated products to achievement of the predetermined target value of the predetermined traceability item of the target product.

6. The information processing device (1) according to any one of claims 1 to 5, wherein the predetermined traceability item includes a carbon footprint of products, a recycling rate related to a predetermined raw material, or a score related to due diligence.

7. The information processing device (1) according to any one of claims 1 to 5, wherein:

   the predetermined traceability item is a carbon footprint of products;
   the product information on each of the incorporated products includes an amount of carbon dioxide emission during production as information on the carbon footprint of products;
   the product information on each of the incorporated products further includes information indicating a reduction in the amount of carbon dioxide emission during production of each of the incorporated products by purchase of carbon credit; and
   the calculating the contribution rate of each of the incorporated products includes calculating the contribution rate of each of the incorporated products to be higher as the reduction by the purchase of the carbon credit decreases when a value of the amount of carbon dioxide emission during production of each of the incorporated products in the product information on each of the incorporated products is the same.

8. The information processing device (1) according to any one of claims 1 to 7, wherein:

the control unit (11) is configured to further execute receiving selection of a plurality of suppliers from among the suppliers of the incorporated products incorporated in the target product; and
the acquiring the pieces of product information on the incorporated products, the calculating the contribution rate of each of the incorporated products, the determining the amount of the incentive for each of the incorporated products, and the notifying the account of the supplier about the information on the determined amount of the incentive are executed for the incorporated products of the selected suppliers.

9. The information processing device (1) according to any one of claims 1 to 8, wherein:

the control unit (11) is configured to further execute receiving a request for the incentive from any of the suppliers of the incorporated products incorporated in the target product; and
the acquiring the pieces of product information on the incorporated products, the calculating the contribution rate of each of the incorporated products, the determining the amount of the incentive for each of the incorporated products, and the notifying the account of the supplier about the information on the determined amount of the incentive are executed in response to reception of the request from any of the suppliers.

10. The information processing device (1) according to any one of claims 1 to 9, wherein:

the control unit (11) is configured to further execute

acquiring information on a product tree indicating relationships among the incorporated products incorporated in the target product, and
identifying the incorporated products incorporated in the target product by referring to the information on the product tree; and

the acquiring the pieces of product information includes acquiring pieces of product information on the identified incorporated products.

11. The information processing device (1) according to any one of claims 1 to 10, wherein the target product is a product related to a battery to be mounted on a battery electric vehicle.

12. An information processing method to be executed by an information processing device (1), the information processing method comprising:

acquiring pieces of product information on a plurality of incorporated products incorporated in a target product, the product information including information on a predetermined traceability item for each of the incorporated products;
calculating a contribution rate of each of the incorporated products to satisfaction of a predetermined condition about the predetermined traceability item of the target product based on the information on the predetermined traceability item in the acquired product information;
determining an amount of an incentive for each of the incorporated products based on the calculated contribution rate of each of the incorporated products; and
notifying an account of a supplier of each of the incorporated products about information on the determined amount of the incentive.

13. The information processing method according to claim 12, wherein the calculating the contribution rate of each of the incorporated products includes calculating the contribution rate of each of the incorporated products to be higher as an amount of improvement in a value related to the predetermined traceability item in the product information on each of the incorporated products in a predetermined period increases.

14. The information processing method according to claim 12, wherein the calculating the contribution rate of each of the incorporated products includes calculating the contribution rate of each of the incorporated products to be higher as a degree of achievement of a value related to the predetermined traceability item in the product information on each of the incorporated products relative to a reference value set for each of the incorporated products increases.

15. A terminal associated with a supplier of a first incorporated product among a plurality of incorporated products incorporated in a target product, the terminal comprising a control unit (11), wherein the control unit (11) is configured to execute:

providing product information on the first incorporated product to a server device, the product information including information on a predetermined traceability item for the first incorporated product; and
receiving a notification about an amount of an incentive for the first incorporated product based on a contribution rate of the first incorporated product to satisfaction of a predetermined condition about the predetermined traceability item of the target product, the contribution rate being calculated in the server device based on the information on the predetermined traceability item in the product information.

# FIG. 1

1

SERVER DEVICE

2     2     2     2

COMPANY TERMINAL    COMPANY TERMINAL    COMPANY TERMINAL    COMPANY TERMINAL

OEM COMPANY (Tier0)    COMPANY A (Tier1)    COMPANY B (Tier2)    COMPANY C (Tier3)

DELIVERY     DELIVERY     DELIVERY

DOWNSTREAM     UPSTREAM

# FIG. 2

# FIG. 3

# FIG. 4

SERVER DEVICE — 1

CONTROL UNIT — 11
- CPU
- RAM
- ROM

STORAGE UNIT — 12
- PROGRAM
- PRODUCT INFORMATION
- ACCOUNT INFORMATION

COMMUNICATION MODULE — 13

INPUT/OUTPUT DEVICE — 14

# FIG. 5

COMPANY TERMINAL — 2

CONTROL UNIT — 21
- CPU
- RAM
- ROM

STORAGE UNIT — 22
- PROGRAM

COMMUNICATION MODULE — 23

INPUT/OUTPUT DEVICE — 24

# FIG. 6

```
SERVER DEVICE  1

  CONTROL UNIT  11

    INFORMATION COLLECTING UNIT  111

    AUTHORITY SETTING UNIT  112

    LINKING UNIT  113

    INFORMATION PROVIDING UNIT  114

    CONTRIBUTION RATE CALCULATING UNIT  115

    INCENTIVE SETTING UNIT  116

  STORAGE UNIT  12

    ACCOUNT INFORMATION

    STORAGE AREA
      PRODUCT INFORMATION

    STORAGE AREA
      PRODUCT INFORMATION

    STORAGE AREA
```

# FIG. 7

_2

COMPANY TERMINAL

_21

CONTROL UNIT

_211

PRODUCT INFORMATION
GENERATING UNIT

_212

AUTHORITY SETTING UNIT

_213

LINKING REQUEST UNIT

_214

INFORMATION ACQUIRING UNIT

_215

NOTIFICATION RECEIVING UNIT

# FIG. 8

| COMPANY ID | | C001 |
|---|---|---|
| COMPANY NAME | | COMPANY A |
| PRODUCT ID | | P001 |
| PRODUCT NAME | | PRODUCT A |
| LINKING-RELATED INFORMATION | UPSTREAM PRODUCT INFORMATION | (UNLINKED) |
| | TERMINATION FLAG | (UNSET) |
| TRACEABILITY-RELATED INFORMATION | MATERIAL USE AMOUNT (LITHIUM) | X[g] |
| | MATERIAL USE AMOUNT (NICKEL) | X[g] |
| | MATERIAL USE AMOUNT (COBALT) | X[g] |
| | MATERIAL USE AMOUNT (LEAD) | X[g] |
| | $CO_2$ EMISSION AMOUNT DURING PRODUCTION | X[g] |
| | DD INFORMATION | *** |
| *** | *** | *** |

## FIG. 9

PRODUCT INFORMATION A OF COMPANY A →

PRODUCT INFORMATION B OF COMPANY B →

111

INFORMATION COLLECTING UNIT

STORAGE AREA B DEDICATED TO COMPANY B

PRODUCT INFORMATION B

STORAGE AREA AB SHARED BY COMPANIES A, B

PRODUCT INFORMATION B

STORAGE AREA A DEDICATED TO COMPANY A

PRODUCT INFORMATION A

INVEST ACCESS AUTHORITY IN COMPANY A BY COPYING PRODUCT INFORMATION TO SHARED AREA

112

PERMISSION INFORMATION FOR PERMITTING COMPANY A TO ACCESS PRODUCT INFORMATION B →

AUTHORITY SETTING UNIT

GENERATE PRODUCT TREE BASED ON PRODUCT INFORMATION

ACQUIRE PRODUCT INFORMATION ACCESSIBLE TO COMPANY A AND PROVIDE IT TO COMPANY A

PERFORM LINKING BY UPDATING PRODUCT INFORMATION A

LINKING UNIT ~113

114

INFORMATION PROVIDING UNIT → PRODUCT TREE

EP 4 439 435 A1

# FIG. 10

| Tier0 | Tier1 | Tier2 | Tier3 |
|-------|-------|-------|-------|

X — A1 $E_{A1}$ — A11 $E_{A11}$ — A111 $E_{A111}$

B1 $E_{B1}$ — A12 $E_{A12}$ — A121 $E_{A121}$

C1 $E_{C1}$ — A13 $E_{A13}$ — A122 $E_{A122}$

D1 $E_{D1}$ — A14 $E_{A14}$ — A123 $E_{A123}$

E1 $E_{E1}$

# FIG. 11

X — A1 — A11 — A111

B1 — **A12** — A121

C1 — A13 — A122

D1 — A14 — A123

E1

AAA CORPORATION
PRODUCT A12

LITHIUM USE AMOUNT ··· [g]
  REUSED LITHIUM AMOUNT ··· [g]
NICKEL USE AMOUNT ··· [g]
  REUSED NICKEL AMOUNT ··· [g]
COBALT USE AMOUNT ··· [g]
  REUSED COBALT AMOUNT ··· [g]
LEAD USE AMOUNT ··· [g]
  REUSED LEAD AMOUNT ··· [g]
$CO_2$ EMISSION AMOUNT ··· [g]
DD INFORMATION ···

# FIG. 12

START

S101

RECEIVE INCENTIVE SETTING REQUEST

S102

IDENTIFY PLURALITY OF INCORPORATED PRODUCTS

S103

TRANSMIT ADVANCE NOTICE ABOUT
INCENTIVE SETTING

END

# FIG. 13

START

S201

CALCULATE AMOUNT OF REDUCTION IN IN-HOUSE CFP
FOR EACH INCORPORATED PRODUCT

S202

CALCULATE CONTRIBUTION RATE OF EACH
INCORPORATED PRODUCT BASED ON AMOUNT
OF REDUCTION IN IN-HOUSE CFP

S203

DETERMINE AMOUNT OF INCENTIVE FOR EACH
INCORPORATED PRODUCT

S204

TRANSMIT INFORMATION ON AMOUNT OF INCENTIVE

END

# FIG. 14

```
          ┌─────────────┐
          │    START    │
          └─────────────┘
                 │
                 │                                        ┌─ S301
    ┌────────────────────────────────────────┐
    │     RECEIVE INCENTIVE SETTING REQUEST   │
    └────────────────────────────────────────┘
                 │
                 │                                        ┌─ S302
    ┌────────────────────────────────────────┐
    │           IDENTIFY PLURALITY OF         │
    │          INCORPORATED PRODUCTS          │
    └────────────────────────────────────────┘
                 │
                 │                                        ┌─ S303
    ┌────────────────────────────────────────┐
    │     SET REFERENCE VALUE OF IN-HOUSE CFP │
    │       FOR EACH INCORPORATED PRODUCT     │
    └────────────────────────────────────────┘
                 │
                 │                                        ┌─ S304
    ┌────────────────────────────────────────┐
    │    CALCULATE DEGREE OF ACHIEVEMENT OF   │
    │    IN-HOUSE CFP OF EACH INCORPORATED    │
    │  PRODUCT RELATIVE TO REFERENCE VALUE    │
    └────────────────────────────────────────┘
                 │
                 │                                        ┌─ S305
    ┌────────────────────────────────────────┐
    │    CALCULATE CONTRIBUTION RATE OF EACH  │
    │        INCORPORATED PRODUCT BASED       │
    │        ON DEGREE OF ACHIEVEMENT OF      │
    │  IN-HOUSE CFP RELATIVE TO REFERENCE VALUE│
    └────────────────────────────────────────┘
                 │
                 │                                        ┌─ S306
    ┌────────────────────────────────────────┐
    │  DETERMINE AMOUNT OF INCENTIVE FOR EACH │
    │          INCORPORATED PRODUCT           │
    └────────────────────────────────────────┘
                 │
                 │                                        ┌─ S307
    ┌────────────────────────────────────────┐
    │         TRANSMIT INFORMATION            │
    │        ON AMOUNT OF INCENTIVE           │
    └────────────────────────────────────────┘
                 │
                 ▼
          ┌─────────────┐
          │     END     │
          └─────────────┘
```

# FIG. 15

SERVER DEVICE 1

## CONTROL UNIT 11

### INFORMATION COLLECTING UNIT 111

### AUTHORITY SETTING UNIT 112

### LINKING UNIT 113

### INFORMATION PROVIDING UNIT 114

### CONTRIBUTION RATE CALCULATING UNIT 115

### INCENTIVE SETTING UNIT 116

## STORAGE UNIT 12

### ACCOUNT INFORMATION

### STORAGE AREA
PRODUCT INFORMATION

### STORAGE AREA
PRODUCT INFORMATION

### STORAGE AREA

### INVENTORY DATA

# FIG. 16

```
                    ┌──────────┐
                    │  START   │
                    └──────────┘
                         │                        ⟋ S401
          ┌──────────────────────────────────┐
          │  RECEIVE INCENTIVE SETTING REQUEST │
          └──────────────────────────────────┘
                         │                        ⟋ S402
          ┌──────────────────────────────────┐
          │       IDENTIFY PLURALITY OF        │
          │      INCORPORATED PRODUCTS         │
          └──────────────────────────────────┘
                         │                        ⟋ S403
          ┌──────────────────────────────────┐
          │   DETERMINE WHETHER IN-HOUSE CFP OF │
          │  EACH INCORPORATED PRODUCT IS UPDATED │
          │      FROM INVENTORY DATA TO ACTUAL   │
          │         MEASUREMENT DATA            │
          └──────────────────────────────────┘
                         │                        ⟋ S404
          ┌──────────────────────────────────┐
          │     CALCULATE CONTRIBUTION RATES   │
          │  OF SPECIFIC INCORPORATED PRODUCTS │
          └──────────────────────────────────┘
                         │                        ⟋ S405
          ┌──────────────────────────────────┐
          │  DETERMINE AMOUNTS OF INCENTIVES FOR │
          │    SPECIFIC INCORPORATED PRODUCTS  │
          └──────────────────────────────────┘
                         │                        ⟋ S406
          ┌──────────────────────────────────┐
          │   TRANSMIT PIECES OF INFORMATION   │
          │     ON AMOUNTS OF INCENTIVES       │
          └──────────────────────────────────┘
                         │
                    ┌──────────┐
                    │   END    │
                    └──────────┘
```

Europäisches
Patentamt

European
Patent Office

Office européen
des brevets

# EUROPEAN SEARCH REPORT

Application Number

EP 24 15 8223

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/107618 A1 (SCHOENEBOOM JAN [DE] ET AL) 7 April 2022 (2022-04-07) * paragraphs [0015], [0063], [0040] * ----- | 1-15 | INV. G06Q30/0207 |
| | | | TECHNICAL FIELDS SEARCHED (IPC) |
| | | | G06Q |

The present search report has been drawn up for all claims

| Place of search | Date of completion of the search | Examiner |
|---|---|---|
| Munich | 31 July 2024 | Haitof, Houssam |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 15 8223

This annex lists the patent family members relating to the patent documents cited in the above-mentioned European search report.
The members are as contained in the European Patent Office EDP file on
The European Patent Office is in no way liable for these particulars which are merely given for the purpose of information.

31-07-2024

| Patent document cited in search report | Publication date | Patent family member(s) | Publication date |
|---|---|---|---|
| US 2022107618 A1 | 07-04-2022 | CN 116438556 A | 14-07-2023 |
| | | DE 112021005271 T5 | 31-08-2023 |
| | | EP 4226299 A1 | 16-08-2023 |
| | | JP 2023543918 A | 18-10-2023 |
| | | US 2022107618 A1 | 07-04-2022 |
| | | US 2022108326 A1 | 07-04-2022 |
| | | US 2022108327 A1 | 07-04-2022 |
| | | US 2023376876 A1 | 23-11-2023 |
| | | WO 2022073935 A1 | 14-04-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004171146 A